(19) Europäisches Patentamt
European Patent Office
Office européen des brevets

(11) **EP 3 424 587 A1**

(12) **EUROPEAN PATENT APPLICATION**
published in accordance with Art. 153(4) EPC

(43) Date of publication:
**09.01.2019 Bulletin 2019/02**

(51) Int Cl.:
**B01D 69/06** (2006.01)   **B01D 63/08** (2006.01)
**B01D 65/08** (2006.01)   **B01D 69/10** (2006.01)
**C02F 1/44** (2006.01)

(21) Application number: **17759997.4**

(22) Date of filing: **28.02.2017**

(86) International application number:
**PCT/JP2017/007775**

(87) International publication number:
**WO 2017/150531 (08.09.2017 Gazette 2017/36)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **29.02.2016 JP 2016036911**
**28.07.2016 JP 2016148401**

(71) Applicant: **Toray Industries, Inc.**
**Tokyo 103-8666 (JP)**

(72) Inventors:
• **OKAMOTO, Yoshiki**
**Otsu-shi**
**Shiga 520-8558 (JP)**
• **KATO, Satoshi**
**Otsu-shi**
**Shiga 520-8558 (JP)**
• **KITADE, Tamotsu**
**Otsu-shi**
**Shiga 520-8558 (JP)**

(74) Representative: **Kador & Partner PartG mbB**
**Corneliusstraße 15**
**80469 München (DE)**

(54) **FLAT-SHEET SEPARATION MEMBRANE ELEMENT, ELEMENT UNIT, FLAT-SHEET SEPARATION MEMBRANE MODULE, AND OPERATION METHOD FOR FLAT-SHEET SEPARATION MEMBRANE MODULE**

(57) The present invention relates to a flat-sheet separation membrane element having formed therein a separation membrane pair in which separation membranes are disposed such that permeation-side faces thereof face each other and in which a channel material is provided, wherein the area of a high-elasticity region satisfying a bending modulus of 100-1000 MPa and a maximum bending stress of 1-15 MPa at least in one direction is not less than 10% of the area of a filtration region of the pair of separation membranes.

Fig. 3

EP 3 424 587 A1

**Description**

TECHNICAL FIELD

The present invention relates to a flat-membrane type separation membrane element, an element unit, a flat-membrane type separation membrane module, and a method for operating a flat-membrane type separation membrane module, which are suitable for use in producing drinking water or in the fields of water treatments, such as water purification and wastewater treatment, and the food industry.

BACKGROUND ART

In recent years, separation membranes of the flat-membrane type and hollow-fiber membrane type have come to be used in the fields of water treatments and the food industry. For example, a membrane element including separation membranes and a membrane module including a plurality of such membrane elements are used in water purification devices. Such separation membranes include microfiltration membranes, ultrafiltration membranes, nanofiltration membranes, reverse osmosis membranes, forward osmosis membranes, etc. from the aspects of their pore sizes and separation performance. These membranes are used, for example, in purification for drinking water production from seawater, brackish water, water containing deleterious substances, etc., and in production of industrial ultrapure water, wastewater treatments, and recovery of valuable substances. Such membranes are used properly in accordance with components to be separated and the separation performance.

A membrane bioreactor method (MBR) is a treatment method in which a separation membrane is immersed in an activated sludge tank to separate the activated sludge from treated water by the membrane. Because the MBR is space-saving and can attain satisfactory water quality, the method is being introduced mainly into small-scale facilities in Japan and introduced into large-scale facilities exceeding 100,000 $m^3$/d in other countries where there are many new facilities.

In the membrane bioreactor method, suspended components contained in the water being treated accumulate on the membrane surface when filtration with a separation membrane module is continuously performed, resulting in a decrease in permeation rate. It is hence necessary to gradually elevate the transmembrane pressure difference in order to maintain a permeation rate.

Because of this, during normal operation of the separation membrane module, compressed air is supplied from an air diffusion pipe disposed in a lower position than the separation membrane module and the flow along the membrane surface is thus disturbed, thereby removing the deposit.

However, the air-diffusing blower is high in energy consumption and this is a problem of the membrane bioreactor method. There is a desire for a separation membrane element and a separation membrane module which are capable of membrane surface cleaning even with a reduced air diffusion amount.

Most conventional flat-membrane type separation membrane elements employ a filtration-membrane support material and a frame which are rigid, and the filtration membranes thereof rarely vibrate even upon diffusion of air bubbles from the air diffusion pipes. The shearing stress which is produced on the membrane surface by the diffused air bubbles is the only means for removing the suspended matter which has adhered to the membrane surfaces.

Patent Document 1 describes a method in which a net made of polyethylene is used as a channel material to configure a flat-membrane element that as a whole is flexible and that has a reduced overall thickness of 1-6 mm, thereby enabling the flat-membrane element to flutter, for example, upon contact with air bubbles to accelerate the removal of the suspended matter from the filtration membrane surfaces and hence reduce the air diffusion amount.

Patent Document 2 describes a method in which use is made of a membrane element that is in a flexible sheet form and has a plurality of projections formed on a surface thereof from an epoxy resin or the like, thereby enhancing the fluttering.

Patent Document 3 describes a separation membrane element which has a configuration including a membrane having a plurality of resin parts disposed on the permeate-side face thereof and thus has a reduced thickness and which thereby combines moderate rigidity with flexibility.

BACKGROUND ART DOCUMENTS

PATENT DOCUMENTS

Patent Document 1: WO 2011/004743
Patent Document 2: JP-A-2008-246371

Patent Document 3: WO 2013/125506

SUMMARY OF THE INVENTION

PROBLEMS THAT THE INVENTION IS TO SOLVE

However, the methods described in Patent Documents 1 to 3, although each effective in heightening the rate of removal of the suspended matter from the filtration membrane surfaces by fluttering the membrane element, are insufficient in the effect of cleaning the membrane surfaces by the fluttering. For further reducing the air diffusion energy, it is necessary to further enhance the fluttering effect.

In addition, the method described in Patent Document 1 has the concern of a decrease in durability due to the reduction in the thickness of the membrane element, and there is an increased possibility that the separation membrane element and the separation membrane surfaces might be damaged during long-term operation, resulting in a decrease in performance.

In the method described in Patent Document 2, the membrane element undesirably has a reduced effective membrane area because projections are formed on a separation membrane surface.

An object of the present invention is to provide a flat-membrane type separation membrane element which can be made to show enhanced fluttering upon air diffusion, in order to reduce the energy consumption of air diffusion in the membrane bioreactor method, and which has improved durability to render long-term stable operation possible despite the enhanced fluttering properties.

MEANS TO SOLVE THE PROBLEMS

<1> A flat-membrane type separation membrane element including a separation membrane pair, in which separation membranes are disposed so that permeate-side faces of the separation membranes face each other and a channel material is disposed inside between the separation membranes to form the separation membrane pair, and the separation membrane pair has a high-modulus region which satisfies, in at least one direction, a bending modulus of 100-1,000 MPa and a maximum bending stress of 1-15 MPa and an area of the high-modulus region accounts for 10% or more of an area of a filtration region of the separation membrane pair.

<2> The flat-membrane type separation membrane element according to claim 1, in which at least a part of the channel material is a plurality of resin parts, the resin parts having been fixed to both the permeate-side faces of the separation membrane pair.

<3> The flat-membrane type separation membrane element according to claim 2, in which the resin parts in the high-modulus region have a tensile modulus of 50-1,000 MPa.

<4> The flat-membrane type separation membrane element according to claim 2 or 3, in which the resin parts in the high-modulus region have been disposed at intervals.

<5> The flat-membrane type separation membrane element according to any one of claims 2 to 4, in which the resin parts have a major-axis length of 10 mm or larger.

<6> The flat-membrane type separation membrane element according to any one of claims 2 to 5, in which the resin parts have a minor-axis length of 1-20 mm.

<7> The flat-membrane type separation membrane element according to any one of claims 2 to 6, in which the resin parts in the high-modulus region have been disposed so that the resin parts extend continuously from one end to the other end of the high-modulus region in at least one direction.

<8> The flat-membrane type separation membrane element according to any one of claims 2 to 7, which has a projected area ratio of the resin parts to the filtration region of the separation membrane pair of 15-80%.

<9> The flat-membrane type separation membrane element according to any one of claims 2 to 8, in which at least some of the resin parts lie on any straight lines passing through any point within the high-modulus region.

<10> The flat-membrane type separation membrane element according to any one of claims 2 to 9, in which the separation membranes have rectangular shape and the resin parts lie on at least a part of a straight line which passes through any point within the high-modulus region in a shorter-side direction of the separation membrane pair.

<11> The flat-membrane type separation membrane element according to any one of claims 1 to 10, in which each side of the separation membrane pair has a length of 300-2,000 mm.

<12> The flat-membrane type separation membrane element according to any one of claims 1 to 11, in which the separation membrane pair satisfies $0.75 \times E1 \times L2/L1 \leq E2 \leq 1.25 \times E1 \times L2/L1$, where L1 is a longer-side-direction length and E1 is a bending modulus, of the separation membrane pair, and L2 is a shorter-side-direction length and E2 is a bending modulus of the separation membranes.

<13> The flat-membrane type separation membrane element according to any one of claims 1 to 12, which has a pure-water permeation coefficient that is at least 0.02 times a pure-water permeation coefficient of the separation membranes.

<14> An element unit including a housing frame and a plurality of flat-membrane type separation membrane elements, in which the plurality of flat-membrane type separation membrane elements are arranged in vertical direction in the housing frame in parallel with maintaining a gap in a horizontal direction, the flat-membrane type separation membrane elements are fixed at any of peripheral edge parts, the flat-membrane type separation membrane elements have a maximum deflection of 0.5-3.0 mm, when a load of 0.1 N is applied to a membrane surface most apart from the fixed parts of the flat-membrane type separation membrane elements.

<15> An element unit including a housing frame and a plurality of the flat-membrane type separation membrane elements according to claims 1 to 13, in which the plurality of flat-membrane type separation membrane elements according to claims 1 to 13 are arranged in vertical direction in the housing frame in parallel with maintaining a gap in a horizontal direction, the flat-membrane type separation membrane elements are fixed at any of peripheral edge parts, the flat-membrane type separation membrane elements have a maximum deflection of 0.5-3.0 mm, when a load of 0.1 N is applied to a membrane surface most apart from the fixed parts of the flat-membrane type separation membrane elements.

<16> The element unit according to claim 14 or 15, in which any adjacent two of the flat-membrane type separation membrane elements are disposed with a spacing of 2-10 mm therebetween.

<17> The element unit according to any one of claims 14 to 16, which satisfies that the maximum deflection which the flat-membrane type separation membrane elements have when a load of 0.1 N is applied to a membrane surface most apart from the fixed parts of the flat-membrane type separation membrane elements is smaller than the spacing between any adjacent two of the flat-membrane type separation membrane elements.

<18> A flat-membrane type separation membrane module which includes the element unit according to any one of claims 14 to 17 and an air-diffusing means disposed in a lower position than the element unit.

<19> The flat-membrane type separation membrane module according to claim 18, in which at least two portions of each of the flat-membrane type separation membrane elements have been fixed.

<20> A method for operating a flat-membrane type separation membrane module, including operating the flat-membrane type separation membrane module according to claim 18 or 19 so that the flat-membrane type separation membrane elements vibrate at a vibrational energy of 0.2-0.5 mN/m.

<21> The method for operating a flat-membrane type separation membrane module according to claim 20, in which the air-diffusing means diffuses air bubbles, which ascend at an average speed of 0.5-6.0 m/min.

<22> The method for operating a flat-membrane type separation membrane module according to claim 20 or 21, in which 50-90% on average of diffused air bubbles which pass through the space between the adjacent flat-membrane type separation membrane elements satisfy B/C>0.6, where B (mm) is an equivalent spherical diameter of each of the diffused air bubbles which each have a volume of 0.5 mm$^3$ or larger and C (mm) is the spacing between the adjacent flat-membrane type separation membrane elements, when passing through the space between the adjacent flat-membrane type separation membrane elements during the operation.

## ADVANTAGES OF THE INVENTION

The present invention can provide a flat-membrane type separation membrane element which can be made to show enhanced fluttering upon air diffusion, in order to reduce the energy consumption of air diffusion in the membrane bioreactor method, and which has improved durability to render long-term stable operation possible despite the enhanced fluttering properties.

## BRIDF DESCRIPTION OF THE DRAWINGS

[Fig. 1] Fig. 1(a) and Fig. 1(b) are sectional views showing an embodiment of the flat-membrane type separation membrane element of the present invention; Fig. 1(a) is a sectional view of the flat-membrane type separation membrane element cut along a plane passing through the thickness center of the element in parallel with the membrane surfaces, and Fig. 1(b) is a sectional view of the flat-membrane type separation membrane element cut in the thickness direction of the element.

[Fig. 2] Fig. 2 is a sectional view showing an embodiment of the flat-membrane type separation membrane element of the present invention, the sectional view corresponding to Fig. 1(a).

[Fig. 3] Fig. 3 is a sectional view showing an embodiment of the flat-membrane type separation membrane element of the present invention, the sectional view corresponding to Fig. 1(a).

[Fig. 4] Fig. 4 is a sectional view showing an embodiment of the flat-membrane type separation membrane element of the present invention, the sectional view corresponding to Fig. 1(a).

[Fig. 5] Fig. 5 is a sectional view showing an embodiment of the flat-membrane type separation membrane element of the present invention, the sectional view corresponding to Fig. 1(a).

[Fig. 6] Fig. 6 is a sectional view showing an embodiment of the flat-membrane type separation membrane element of the present invention, the sectional view corresponding to Fig. 1(a).

[Fig. 7] Fig. 7 is a sectional view showing an embodiment of the flat-membrane type separation membrane element of the present invention, the sectional view corresponding to Fig. 1(a).

[Fig. 8] Fig. 8 is a sectional view showing an embodiment of the flat-membrane type separation membrane element of the present invention, the sectional view corresponding to Fig. 1(a).

[Fig. 9] Fig. 9 is a sectional view showing an embodiment of a water collection nozzle of a flat-membrane type separation membrane element of the present invention.

[Fig. 10] Fig. 10 is a sectional view showing an embodiment of through holes of a flat-membrane type separation membrane element of the present invention.

[Fig. 11] Fig. 11 is a front view schematically showing an embodiment of the element unit which constitutes a flat-membrane type separation membrane module of the present invention.

[Fig. 12] Fig. 12 is a front view schematically showing an embodiment of the element unit which constitutes a flat-membrane type separation membrane module of the present invention.

[Fig. 13] Fig. 13 is a front view schematically showing an embodiment of the element unit which constitutes a flat-membrane type separation membrane module of the present invention.

[Fig. 14] Fig. 14 is a schematic view showing one example of water treatment devices employing a membrane module including flat-membrane type separation membrane elements of the present invention.

MODE FOR CARRYING OUT THE INVENTION

Embodiments of the present invention are described in detail below.

1. Separation Membranes

The separation membranes in the present invention are flat separation membranes, and each preferably includes a nonwoven-fabric-based substrate and a separation functional layer formed on the substrate.

<Substrate>

In the separation membrane including a separation functional layer and a substrate, the substrate has the function of supporting the separation functional layer and imparting strength to the separation membrane.

Preferred for use as the substrate is a fibrous substrate from the standpoints of strength, channel-member-forming ability, and fluid permeability. Either a long-fiber nonwoven fabric or a short-fiber nonwoven fabric can be advantageously used as the substrate.

In particular, the long-fiber nonwoven fabric has excellent suitability for membrane formation and, hence, is effective in avoiding the following troubles: when a polymer solution is poured onto a substrate, the solution infiltrates thereinto excessively to reach the back surface; a separation functional layer peels off; an uneven membrane is formed due to the fluffing, etc. of a substrate; and defects such as pinholes are formed.

In cases when the substrate is constituted of a long-fiber nonwoven fabric composed of thermoplastic continuous filaments, it is possible to inhibit membrane unevenness and membrane defects from occurring due to fiber fluffing during the pouring of a polymer solution, as compared with short-fiber nonwoven fabrics. Furthermore, since tension is applied in the direction of membrane formation when a separation membrane is continuously formed, it is preferred to use, as the substrate, a long-fiber nonwoven fabric having excellent dimensional stability.

The material of the substrate is not particularly limited, and examples thereof include organic substances and inorganic substances. However, organic substances are preferred from the standpoint of ease of weight reduction. Examples of the organic substances include cellulose fibers, cellulose triacetate fibers, polyester fibers, polypropylene fibers, and polyethylene fibers.

The nonwoven fabric preferably has densely fused parts, coarsely fused parts, and non-fused parts. In cases when the nonwoven fabric has densely fused parts, coarsely fused parts, and non-fused parts, the resin parts serving as a channel material infiltrate into the surface pores among fibers of the nonwoven fabric, thereby having improved bonding strength.

The nonwoven fabric preferably has a dense fusion ratio of 5-50%. By regulating the dense fusion ratio of the nonwoven fabric to 5-50%, this nonwoven fabric not only has surface pores among fibers in an amount suitable for resin fixing but also has enhanced shape retentivity and is less apt to deform when conveyed.

The dense fusion ratio is the ratio of the area occupied by the densely fused parts to the area of the nonwoven fabric.

The term "densely fused part" means a region where a plurality of fibers have been thermally fused, and the size of each densely fused part is different from the diameter of the fibers constituting the nonwoven fabric. For example, the surface of the nonwoven fabric is examined with an electron microscope or the like, and a part having a width larger than the average diameter of the fibers constituting the nonwoven fabric is a fused part.

In cases when the width thereof is less than 1.8 times the average fiber diameter, that part is a coarsely fused part. In cases when the width thereof is 1.8 times or more the average fiber diameter, that part is a densely fused part.

The term "average fiber diameter" means the average value of measured diameters of any 50 fibers selected from the fibers constituting the nonwoven fabric and not fused to another fiber.

The dense fusion ratio of a substrate can be determined in the following manner. A surface of the substrate cut into a size of 50 mm × 50 mm is scanned with a digital scanner (CanonScan N676U, manufactured by Canon), and the digital image obtained is analyzed with an image analysis software (ImageJ) to calculate a dense fusion ratio for the obtained image using: dense fusion ratio (%) = 100× [(densely fused parts)/(cut-out area)]. This operation is repeatedly conducted 50 times, and an average of these values is taken as the dense fusion ratio.

The surface pore ratio, which is the proportion of interstices among fibers, in the coarsely fused parts is preferably 25-60% for the same reason as for the dense fusion ratio. The surface pore ratio can be determined in the following manner. A surface of the substrate cut into a size of 50 mm × 50 mm is scanned with a digital scanner (CanonScan N676U, manufactured by Canon), and the digital image obtained is analyzed with an image analysis software (ImageJ) to calculate a surface pore ratio for the obtained image using: surface pore ratio (%) = 100×[(surface pores)/(cut-out area)]. This operation is repeatedly conducted 50 times, and an average of these values is taken as the surface pore ratio.

The term "non-fused part" means a region where the nonwoven-fabric fibers remain unfused. The surface pore ratio, which is the proportion of interstices among fibers, in the non-fused parts is preferably 15-70% for the same reason as for the dense fusion ratio. In the case where projections are linearly disposed, it is preferable that at least 20% by area of the portions of the projections which are in contact with the nonwoven fabric are disposed over surface pores.

When the densely fused parts have too large a width, the region where projections cannot infiltrate increases in area. Consequently, the width of the densely fused parts is preferably 2 mm or less, more preferably 1 mm or less.

For the same reason, the arrangement of densely fused parts may be suitably designed with a pitch of 1-50 mm. The term "pitch" means the horizontal distance between the position of the center of gravity of a densely fused part and the position of the center of gravity of a densely fused part adjacent to said densely fused part.

The infiltration of projections proceeds in the non-fused parts and does not proceed in the densely fused parts. The nonwoven fabric hence comes to have both a layer impregnated with projections and a region unimpregnated therewith. When projections are produced by applying a molten resin to the nonwoven fabric and solidifying the resin, quality deteriorations caused by even impregnation, such as membrane curling, tend less to occur because thermal shrinkage behaviors of those two regions differ.

When the densely fused parts are present regularly, the nonwoven fabric has reduced unevenness in rigidity and can be prevented from suffering winkles, breakage, etc. when conveyed. When the plurality of densely fused parts disposed in the nonwoven fabric form a certain appearance and there are regions in which these parts are similarly arranged in the machine direction, the appearance formed by the plurality of densely fused parts are sometimes called a "pattern". More preferred is a lattice pattern, a zigzag pattern, or a combination of these.

The shape of the pattern of the densely fused parts is not particularly limited. Examples of the shape thereof observed from over the surface having the projections fixed thereto include oval, circular, ellipsoidal, trapezoidal, triangular, rectangular, square, parallelogrammic, and diamond-shaped.

As a method for fusing a nonwoven fabric, a conventionally known method can be employed, such as laser irradiation, hot roll treatment, or calendering. In the case of fusing with a hot roll, embossing is preferred from the standpoint of the ability to stably form densely fused parts during production.

Embossing is processing in which the nonwoven fabric is hot-pressed using an embossing roll. Usually, the nonwoven fabric is pressed with two rolls, a roll having a smooth surface and a hot roll having an embossing pattern. The linear pressure for the pressing is preferably 1-50 kg/cm. When the linear pressure is too low, sufficient strength cannot be imparted. When the linear pressure is too high, the fibers constituting the nonwoven fabric tend to be undesirably formed into a film, rendering the projections less apt to infiltrate into the nonwoven fabric.

The embossing may be given to either one face or both faces of the nonwoven fabric. In the case of performing embossing on one face, the face having a height difference tends to have a lower dense fusion ratio than the other face. One-face embossing is hence suitable from the standpoint of impregnation with projections. However, embossing both faces is superior from the standpoint of stably conveying the nonwoven fabric because this embossing forms densely fused parts which are present symmetrically in the thickness direction and hence imparts higher rigidity to the nonwoven fabric.

Regarding the thickness of the substrate, when the substrate is too thin, the separation membrane is less apt to retain the required strength. Meanwhile, when the substrate is excessively thick, not only a decrease in permeation rate results but also the flat-membrane type separation membrane element has an increased thickness to undesirably reduce the overall membrane area of the flat-membrane type separation membrane module. Consequently, the thickness of the substrate is preferably in the range of 50-1,000 $\mu$m, most preferably in the range of 70-500 $\mu$m.

The density of the substrate is preferably 0.7 g/cm$^3$ or less, more preferably 0.6 g/cm$^3$ or less.

When the density of the substrate is within that range, this substrate is suitable for receiving a resin for porous-resin-layer formation to form an appropriate composite layer containing the substrate and the porous resin layer. In addition, this substrate is effective in ensuring adhesive strength because this substrate is apt to be impregnated with a resin when the resin is formed as a channel material on the face of the substrate of a separation membrane.

However, in case where the density thereof is excessively low, the separation membrane has reduced strength and the resin for forming a channel material infiltrates excessively into the substrate, resulting in a decrease in the performance of the separation membrane. Consequently, the density of the substrate is preferably 0.3 g/cm$^3$ or higher.

The density herein is apparent density and can be determined from the area, thickness, and weight of the substrate.

The apparent density of a substrate can be determined by cutting the substrate to obtain fifty substrate samples each having a size of 50 mm × 50 mm, measuring the dry weight and thickness of each sample, calculating average values thereof, and dividing the weight by the thickness and area of the substrate.

<Separation Functional Layer>

Usable examples of the material of the separation functional layer include polyethylene resins, polypropylene resins, poly(vinyl chloride) resins, poly(vinylidene fluoride) resins, polysulfone resins, polyethersulfone resins, polyimide resins, and polyetherimide resins.

The separation functional layer may be made of any of these resins only or may be made of a resin including any of these resins as a main component. The term "main component" herein means that said resin is contained in an amount of 50% by weight or larger, preferably 60% by weight or larger. Preferred of those resins are poly(vinyl chloride) resins, poly(vinylidene fluoride) resins, polysulfone resins, and polyethersulfone resins, because membrane formation from solutions of these resins is easy and these resins are excellent in terms of physical durability and chemical resistance. Especially preferred are poly(vinylidene fluoride) resins or resins each including a poly(vinylidene fluoride) resin as a main component.

The thickness of the separation functional layer is usually preferably in the range of 1-500 $\mu$m, more preferably in the range of 5-200 $\mu$m. When the separation functional layer is too thin, the substrate may be partly exposed and suspended substances may adhere to the substrate, resulting in an increase in filtration pressure. In some cases, this separation membrane does not sufficiently recover the filtration performance even when cleaned. Meanwhile, when the separation functional layer is too thick, a decrease in permeation rate may result.

Some of the resin constituting the separation functional layer has infiltrated into at least a surface-layer part of the substrate and has formed a composite layer with the substrate in at least the surface-layer part. The infiltration of the poly(vinylidene fluoride)-based blend resin into an inner part from the substrate surface has produced the so-called anchoring effect, whereby the separation functional layer is tenaciously fixed to the substrate and is prevented from coming off the substrate. The separation functional layer may be either symmetrical or asymmetrical in the thickness direction of the separation functional layer.

<Process for producing the Separation Membranes>

A process for producing each of the separation membranes to be used in the present invention is described next. The separation membrane can be produced by adhering a membrane-forming solution, which contains a poly(vinylidene fluoride)-based resin, a pore-forming agent, etc., to one surface of the substrate and coagulating the applied membrane-forming solution in a coagulating liquid including a nonsolvent to form a separation functional layer. Use may be made of a method in which a separation functional layer alone is formed separately from the substrate and the two are bonded together later.

In coagulating the membrane-forming solution, only the film of the membrane-forming solution formed on the substrate in order to form a separation functional layer may be brought into contact with the coagulating liquid. Alternatively, the film of the membrane-forming solution for forming a separation functional layer may be immersed in the coagulating liquid together with the substrate.

For bringing only the film of the membrane-forming solution for forming a separation functional layer into contact with the coagulating liquid, use may be made, for example, of: a method in which the film of the membrane-forming solution formed on the substrate is brought into contact with the surface of the coagulating bath while keeping the film of the membrane-forming solution on the lower side of the substrate; or a method in which the substrate is brought into contact with a smooth plate, e.g., a glass plate or a metal plate, and bonded thereto in order to prevent the coagulating bath from entering the substrate side, and the substrate having the film of the membrane-forming solution formed thereon is immersed in the coagulating bath together with the plate.

In the latter method, a film of the membrane-forming solution may be formed after the substrate is bonded to a plate, or the substrate on which a film of the membrane-forming solution has been formed may be bonded to a plate.

Besides the poly(vinylidene fluoride)-based resin, ingredients may be added to the membrane-forming solution according to need. Such ingredients may include a pore-forming agent and a solvent for dissolving the resin and the pore-forming agent.

In the case where a pore-forming agent having the function of accelerating pore formation is added to the membrane-forming solution, the pore-forming agent may be any pore-forming agent which can be extracted with the coagulating liquid. Preferred are ones having high solubility in the coagulating liquid. For example, use can be made of inorganic salts such as calcium chloride and calcium carbonate. Furthermore, use can be made of water-soluble polymers such as polyoxyalkylenes, e.g., poly(ethylene glycol) and poly(propylene glycol), poly(vinyl alcohol), poly(vinyl butyral), and poly(acrylic acid) and glycerin.

The pore-forming agent can be selected at will in accordance with the kind of the resin to be used in the membrane-forming solution. For example, in the case of using a resin including poly(vinylidene fluoride) as a main component, it is preferred to use one or more polymers including poly(ethylene glycol) as a main component. In particular, it is especially preferred to use one or more polymers including poly(ethylene glycol) having a weight-average molecular weight of 10,000 or higher, from the standpoint of attaining a balance among surface pore diameter, pore diameter distribution, and water permeability.

When a solvent for dissolving the poly(vinylidene fluoride)-based resin, other organic resins, a pore-forming agent, etc. in the membrane-forming solution is used, the solvent can be N-methylpyrrolidone (NMP), N,N-dimethylacetamide (DMAc), N,N-dimethylformamide (DMF), dimethyl sulfoxide (DMSO), acetone, methyl ethyl ketone, or the like. Preferred of these are NMP, DMAc, DMF, and DMSO, in which the poly(vinylidene fluoride)-based resin has high solubility.

A nonsolvent can be further added to the membrane-forming solution. The nonsolvent is a liquid in which neither the poly(vinylidene fluoride)-based resin nor other organic resins dissolve and which serves to control the rate of coagulation of the poly(vinylidene fluoride)-based resin and other organic resins to control the size of the pores.

As the nonsolvent, water or an alcohol such as methanol or ethanol can be used. Preferred of these are water and ethanol, from the standpoints of ease of wastewater treatment and cost. A mixture of these may also be used.

In the composition of the membrane-forming solution, the content of the poly(vinylidene fluoride)-based resin is preferably in the range of 5-30% by weight, that of the pore-forming agent is preferably in the range of 0.1-15% by weight, that of the solvent is preferably in the range of 45-94.8% by weight, and that of the nonsolvent is preferably in the range of 0.1-10% by weight.

With respect to the content of the poly(vinylidene fluoride)-based resin among those ingredients, exceedingly low contents thereof may result in a porous layer having reduced strength and too high contents thereof may result in a decrease in water permeability. A more preferred range thereof hence is 8-20% by weight.

Too low contents of the pore-forming agent may result in a decrease in water permeability, while too high contents thereof may result in a porous layer having reduced strength. In addition, when the content thereof is exceedingly high, some of the pore-forming agent may remain in the poly(vinylidene fluoride)-based resin in too large an amount and elute during use to impair the quality of the permeate or cause fluctuations in water permeability. Consequently, a more preferred range of the content of the pore-forming agent is 0.5-10% by weight.

Too low contents of the solvent render the membrane-forming solution prone to gel, while too high contents thereof result in a porous layer having reduced strength. The content of the solvent is more preferably in the range of 60-90% by weight.

Too high contents of the nonsolvent render the membrane-forming solution prone to gel, while exceedingly low contents thereof make it difficult to control the sizes of pores and microvoids. Consequently, the content of the nonsolvent is more preferably 0.5-5% by weight.

Meanwhile, as the coagulating bath, either a nonsolvent or a mixed solution including a nonsolvent and a solvent can be used. When the membrane-forming solution also contains a nonsolvent, it is preferred to regulate the nonsolvent content in the coagulating bath to at least 80% by weight of the coagulating bath. Too low contents thereof make the poly(vinylidene fluoride)-based resin have a reduced coagulation rate and an increased pore diameter. The content of the nonsolvent in the coagulating bath is more preferably in the range of 85-100% by weight.

Meanwhile, in the case where the membrane-forming solution contains no nonsolvent, it is preferred to regulate the nonsolvent content in the coagulating bath so as to be lower than in the case where the membrane-forming solution also contains a nonsolvent. The content of the nonsolvent in the coagulating bath is preferably up to 40% by weight at the most. Too high nonsolvent contents may make the poly(vinylidene fluoride)-based resin have an increased coagulation rate to give a porous layer having a dense surface, resulting in a decrease in water permeability. The content of the nonsolvent is more preferably in the range of 1-40% by weight. By regulating the content of the nonsolvent in the coagulating liquid, the diameter of the surface pores of the porous layer and the size of the microvoids can be controlled.

With respect to the temperature of the coagulating bath, too high temperatures thereof result in too high a coagulation rate, while too low temperatures thereof result in too low a coagulation rate. It is hence preferred to select the temperature of the coagulating bath usually from the range of 15-80°C. More preferably, the temperature thereof is in the range of 20-60°C.

The flat-membrane type separation membrane element of the present invention is applicable to any of a reverse osmosis membrane, nanofiltration membrane, ultrafiltration membrane, and microfiltration membrane. One or more kinds of appropriate membranes may be selected and combined in accordance with the size of the substance to be separated. Especially preferred for use in sewage or wastewater treatment are an ultrafiltration membrane and a microfiltration membrane.

2. Flat-membrane Type Separation Membrane Element

The flat-membrane type separation membrane element of the present invention includes: separation membranes which are disposed so that permeate-side faces thereof face each other and projections which is disposed as a channel material inside between the separation membranes to form a separation membrane pair; and a permeate collection part provided to the separation membrane pair. At least some of the peripheral edge parts of the separation membrane pair may have been sealed.

The expression "separation membranes disposed so that permeate-side faces thereof face each other" means that two separation membranes are disposed so that the permeate-side faces thereof face each other. The two opposed separation membranes are referred to as "a separation membrane pair".

The two opposed separation membranes may be two separation membranes which can be separated from each other or may be one separation membrane which has been folded.

A channel material has been provided to the separation membrane pair to maintain a given spacing, thereby ensuring a channel through which the water that has permeated the membranes passes. After passing through the channel, the water is collected in the permeate collection part and then taken out therefrom.

At least some of the peripheral edge parts of the separation membrane pair is sealed with an adhesive resin or by a method such as thermal fusion or ultrasonic fusion, thereby configuring a sealed part. The permeate collection part has been provided to some of the peripheral sealing part, and this permeate collection part is not sealed.

The sealed part is disposed in the periphery of the separation membrane pair. The sealed part adheres to both of the two opposed permeate-side faces of the separation membrane pair, thereby sealing the gap between the separation membranes of the separation membrane pair. Thus, a bag-shaped membrane is formed.

The sealing is to prevent the feed water from flowing directly into the inside of the bag-shaped membrane (that is, for preventing the feed water from flowing thereinto without permeating the separation membranes), by adhesive bonding, pressure bonding, fusion or welding, folding, etc. The sealing is to prevent the permeate, which has permeated the separation membranes, from leaking from the flat-membrane type separation membrane element without via the permeate collection part.

The term "inside" means the space between the permeate-side faces of the opposed separation membranes, i.e., the portions of the permeate-side surfaces of the separation membranes which exclude the periphery. Especially when the separation membranes are in the form of a bag-shaped membrane as described above, the portion surrounded by the sealed part corresponds to the "inside" and this is the region where filtration is substantially performed.

As the permeate-side channel material, use can be made of a sheet-shaped member having water permeability (e.g., a nonwoven fabric, woven fabric, or net), a plurality of resin parts (projections) formed on the permeate-side face of a separation membrane, or a sheet having resin parts (projections). Preferred is to use the plurality of resin parts (projections) or the sheet having resin parts (projections), among those, from the standpoint of the flow resistance of the permeate which has permeated the separation membranes.

By maintaining a given gap on the permeate side of the separation membranes in the flat-membrane type separation membrane element, the permeate which has permeated the separation membranes can be made to have reduced flow resistance.

The permeate-side spacing between the separation membranes is preferably in the range of 50-5,000 $\mu$m. When the spacing between the separation membranes exceeds 5,000 $\mu$m, this flat-membrane type separation membrane element has an increased thickness and the number of such flat-membrane type separation membrane elements which can be disposed in a flat-membrane type separation membrane module becomes small, undesirably resulting in a decrease in overall membrane area. Meanwhile, when the spacing between the separation membranes is less than 50 $\mu$m, the inside space on the permeate side is too narrow, undesirably resulting in an increase in the flow resistance of the permeate and a decrease in permeation rate. The spacing between the separation membranes is more preferably in the range of 500-3,000 $\mu$m.

In the flat-membrane type separation membrane element of the present invention, at least a part of the channel material disposed inside the separation membrane pair may be made of a plurality of resin parts (projections). The plurality of resin parts (projections) have been fixed to both the two opposed permeate-side faces.

Due to this configuration, even when the element is subjected to back washing, the pressure is not concentrated in the sealed part and is distributed and applied also to the bonded parts (resin parts) inside. Consequently, an effect is obtained in which the separation membranes are prevented from suffering separating therebetween and water leakage from the feed side to the permeate side is less apt to occur.

Furthermore, the individual resin parts (projections) can have relatively high rigidity. The rigidity of the flat-membrane type separation membrane element can hence be set suitably, by designing the disposition of the resin parts.

A component of the resin constituting the resin parts (projections) may have infiltrated into the substrate of each separation membrane. When a resin is disposed on the permeate-side substrate of a separation membrane and heated from the surface of the separation functional layer of the separation membrane, then infiltration of the resin proceeds from the permeate side toward the functional layer of the separation membrane. As the infiltration thus proceeds, the bonding between the resin parts (projections) and the substrate becomes stronger. Because of this, the thus-produced element, when washed with a liquid chemical even from the permeate side, is less apt to suffer separation between the separation membranes of the separation membrane pair.

The depth to which the resin parts (projections) have infiltrated is preferably large, because the larger the depth, the higher the bonding strength between the resin parts and the substrate of the separation membrane. However, when the depth to which the resin parts have infiltrated is too large, the substrate has a reduced porosity and the water permeability of the separation membrane is affected, undesirably resulting in a decrease in permeation rate. It is therefore preferable that the depth of infiltration into the substrate is up to two-thirds of the thickness of the substrate of the separation membrane.

Consequently, the depth of infiltration of the resin parts is preferably 1-333 $\mu$m, more preferably 10-200 $\mu$m.

The bonding strength between the resin parts and the substrate is preferably 100 N/m or higher. When the bonding strength between the resin parts and the substrate is 100 N/m or higher, this flat-membrane type separation membrane element is prevented from suffering separation between the separation membranes even when the back washing is performed. In addition, when such flat-membrane type separation membrane elements are set in a flat-membrane type separation membrane module and this module is operated while cleaning the membrane surfaces by air diffusion, the flat-membrane type separation membrane elements are not damaged over a long period of time and this module can be stably operated.

The bonding strength between the resin parts and the substrate of a separation membrane is determined in the following manner. A separation membrane pair having dimensions of 15 mm (width) $\times$ 75 mm is produced in which a channel material has been fixed to both permeate-side faces of the separation membranes. The channel material is separated from either of the membrane faces over the longitudinal-direction dimension of 75 mm except the 15-mm central portion, and the opposed membranes are each bent into a U shape. This specimen is set on a tensile tester (trade name, Tensilon RTG-1210; manufactured by A&D Co., Ltd.) by gripping the upper and lower ends of the bent portions, and a tensile test is conducted at a speed of 2 mm/min at 25°C and a relative humidity of 65%. During this tensile test, the tensile force at the time when the channel material is separated from the face of either of the upper and lower membranes is measured. This measurement is made ten times on separation membrane pairs on the same level, and an average value thereof is taken as the bonding strength.

In the flat-membrane type separation membrane element of the present invention, at least 10% by area of the filtration region of the separation membrane pair has a bending modulus as measured in at least one direction of 100-1,000 MPa and has a maximum bending stress as measured in at least one direction of 1-15 MPa.

The "region which has a bending modulus as measured in at least one direction of 100-1,000 MPa and has a maximum bending stress as measured in at least one direction of 1-15 MPa" is called a high-modulus region.

The phrase "at least 10% by area of the filtration region of the separation membrane pair" means that when the flat-membrane type separation membrane element is cut into a given size and the resultant samples are each examined for bending modulus and maximum bending stress, then the total area of samples which satisfy those ranges is 10% or more of the overall membrane area. The proportion of the high-modulus region is preferably 50% or higher, more preferably 90% or higher, even more preferably 100%.

The proportion of the area of regions which satisfy those ranges is the areal proportion of continuous regions in the filtration region of the separation membrane pair, and cannot be a sum of the areas of discontinuous regions.

It is preferable that the filtration region which satisfies those ranges has been disposed at least around a longer-side-direction end of the separation membrane pair. This is because this configuration, in which the filtration region which satisfies those ranges has been disposed at least around a longer-side-direction end of the separation membrane pair, can not only enhance the fluttering when this flat-membrane type separation membrane element is used in an operation but also heighten the durability.

The term "filtration region" used for, for example, a separation membrane pair sealed at peripheral edge parts means the inner region which is the portion other than the peripheral sealed part having substantially no separation-membrane function. The filtration region is the region where the separation membrane pair coexists with the resin parts (projections).

It is preferred that the bending modulus and the maximum bending stress both measured in at least one direction are within those ranges, because, within those ranges, the flat-membrane type separation membrane element can be vibrated at a larger amplitude and, hence, the suspended matter which has adhered to the membrane surfaces can be efficiently removed when this flat-membrane type separation membrane element is used in an air-diffusion operation in an immersion type water tank.

The bending modulus is more preferably 300-700 MPa, even more preferably 400-600 MPa.

The maximum bending stress is more preferably 3-12 MPa, even more preferably 5-10 MPa.

When the maximum bending stress is less than 1 MPa, the flat-membrane type separation membrane element has reduced rigidity and it is highly likely that in cases when this flat-membrane type separation membrane element is used in an air-diffusion operation in an immersion type water tank and repeatedly vibrated, then the flat-membrane type separation membrane element and the separation membranes suffer damage.

Meanwhile, when the bending modulus exceeds 1,000 MPa or the maximum bending stress exceeds 15 MPa, the flat-membrane type separation membrane element is less apt to vibrate.

The term "bending modulus" means a bending stress measured in a bending strength test where a test piece is horizontally placed on two supporting points and a bending load is imposed with a wedge from over the center of the test piece.

The term "maximum bending stress" means the stress at the point of time when the stress value in a stress-strain diagram obtained in the bending test is maximum.

The bending modulus and the maximum bending stress can be measured by cutting the flat-membrane type separation membrane element into a given size and subjecting the separation membrane pair (including the resin parts disposed inside the two separation membranes) to a three-point bending test.

The bending modulus and the maximum bending stress can be measured by the method as provided for in ASTM D790. Specifically, a separation membrane pair having a width of 48 mm and a length of 80 mm (including a channel material disposed inside the two separation membranes) is produced, and supports are set beneath both ends of the separation membrane pair along the 80-mm length so as to leave a space of 50 mm therebetween. Using a compression tester (Tensilon RTG-1210, manufactured by A&D Co., Ltd.), the center of the membrane element is pressed with an indenter (radius, 5 mm) at a speed of 1.3 mm/min. The bending modulus and the maximum bending stress can be calculated from the thus-obtained relationship between displacement and load using the calculation formulae which will be given later.

The resin parts preferably have a tensile modulus of 10-2,000 MPa. When the tensile modulus of the resin parts is within that range, a moderate bending modulus and a moderate maximum bending stress can be imparted to the flat-membrane type separation membrane element.

When the tensile modulus of the resin parts is less than that range, the element undesirably is too low in bending modulus and maximum bending stress. When the tensile modulus of the resin parts is higher than that range, the element is too high in bending modulus and maximum bending stress. Such values of the tensile modulus are hence undesirable.

The tensile modulus of the resin parts is more preferably 50-1,000 MPa, even more preferably 80-500 MPa.

The tensile modulus of the resin parts can be measured by the method as provided for in JIS K7161.

The component constituting the resin parts (projections) is not particularly limited so long as the tensile modulus is satisfied. Preferred are polyolefins and olefin polymers, such as ethylene/vinyl acetate copolymers, polyethylene, and polypropylene. Polymers and elastomers such as urethane resins and epoxy resins can also be selected. However, thermoplastic polymers are easy to mold and evenness in resin shape can hence be attained therewith.

One of these resins may be used alone, or a mixture of two or more of these resins may be used.

Preferred is a resin having a softening point of 80-200°C. The softening point is the temperature at which the resin begins to soften and deform, and is measured by a ring and ball method.

Specifically, the methods as provided for in JIS K-2531, JIS K-2207/2425, JIS K6863-1994, and ASTM D-36 are suitable for use. It is only required that the softening point measured by any one of these methods is within that range. It is more preferable that the softening point measured by the method described in JIS K6863-1994 is within that range.

With respect to the proportion (projected area ratio) of the area of the resin parts (projections) to the area of the filtration region of the separation membrane pair, too small values thereof raise concerns not only that the separation membranes might separate from each other upon washing with a liquid chemical from the permeate side, but also that the rigidity of the separation membrane pair is hard to attain. Meanwhile, larger values thereof make it easy to maintain the rigidity of the separation membrane pair but pose a problem in that the resin parts constitute an obstacle in the channel, resulting in a decrease in permeation rate.

It is hence preferable that the projected area ratio of the resin parts to the area of the filtration region of the separation membrane pair is set so as to be in the range of 10-90%. The projected area ratio thereof is more preferably 15-80%, even more preferably 20-50%.

The projected area ratio can be determined by photographing cross-sections of any thirty channel-material projections using a microscope (S-800, manufactured by Keyence Corp.) at a magnification of 10 diameters and analyzing the obtained digital images with an image analysis software (ImageJ) to binarize the data.

The resin parts (projections) can be formed so that the thickness-direction cross-sections thereof have a circular, oval, square, rectangular, parallelogrammic, trapezoidal, or triangular shape or the like. The lateral faces of the resin parts (projections) can be changed to faces of various shapes including recessed faces, protruding faces, curved faces, and flat faces.

Next, an explanation is given on the plan-view shape of the resin parts (projections) in the present invention, i.e., the shape of the resin parts (projections) projected on a separation membrane. An important point in the present invention is that a resin is applied to a separation membrane to form resin parts (projections) to thereby enable the resin to impart a moderate bending modulus and a moderate maximum bending stress to the flat-membrane type separation membrane element. Consequently, the shape of the resin parts (projections) viewed from over a membrane surface is not particularly limited so long as the desired effects of the flat-membrane type separation membrane element are not impaired.

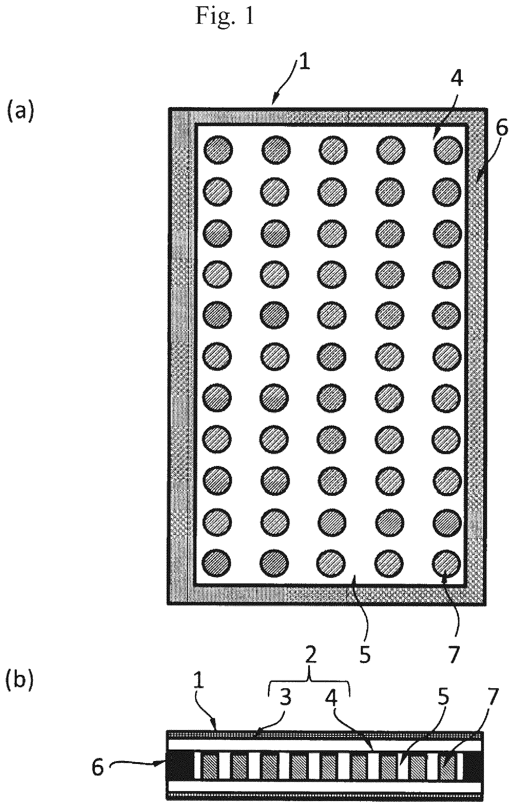

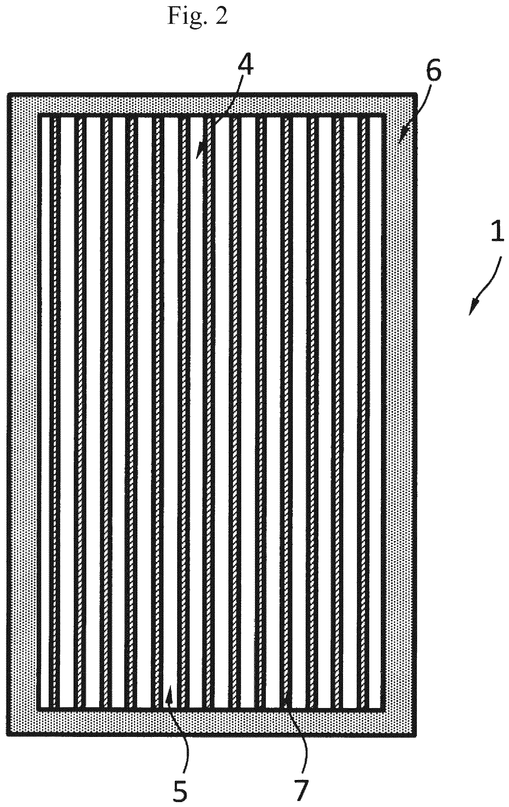

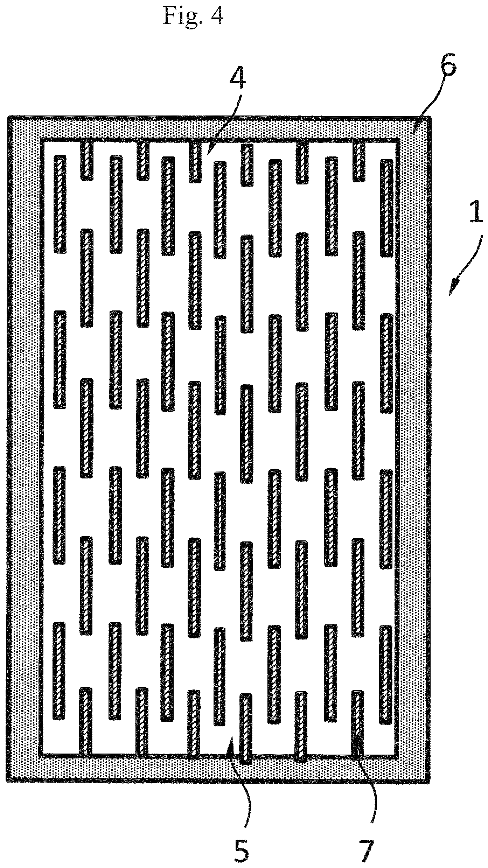

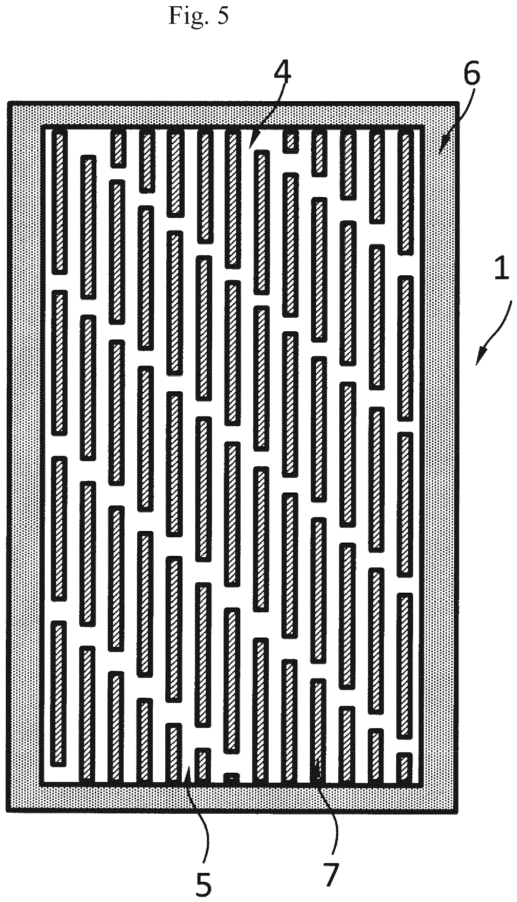

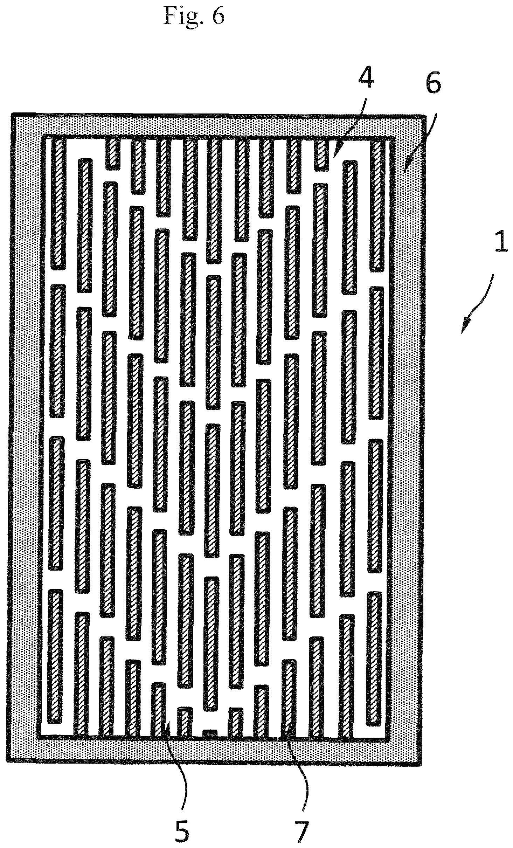

For example, in one of the sectional views of Fig. 1, the resin parts (projections) have a circular sectional shape. In the sectional views of Fig. 2 to Fig. 6, the resin parts (projections) have rectangular sectional shapes. The sectional shape of the resin parts (projections) is not limited to these examples, and the resin parts can be formed so as to have an oval, polygonal, or indefinite shape, etc.

The plan-view shape of the separation membrane pair is not particularly limited. In general, however, approximately rectangular separation membranes are used.

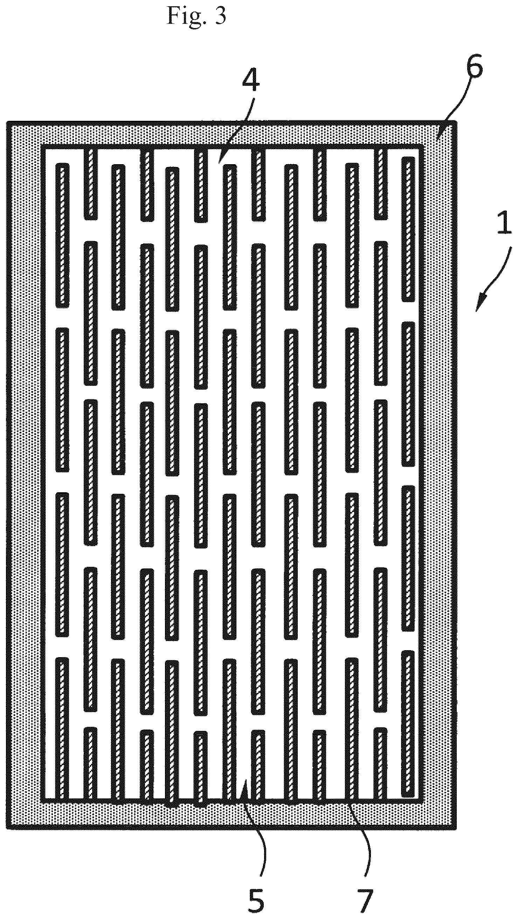

The pattern of arrangement in which the resin parts (projections) are disposed is not particularly limited, and examples thereof include: an arrangement pattern in which circular dots have been intermittently disposed as shown in Fig. 1; an arrangement in which rectangular resin parts have been disposed so as to extend continuously from one end to the other end of the separation membrane pair excluding the sealed part, as shown in Fig. 2; and an arrangement in which rectangular resin parts have been formed intermittently so as to leave a given spacing therebetween, as shown in Fig. 3 to Fig. 6. However, in order to set the bending modulus and the maximum bending stress within appropriate ranges, it is preferred to dispose resin parts in such an arrangement that at least one resin part lies on any straight line(s) perpendicular to at least one direction.

Especially in the case where the separation membrane pair has a rectangular shape, it is preferable that one or more resin parts lie on at least a part of a straight line which passes through any point within the separation membrane pair in the shorter-side direction.

Furthermore, it is preferable that at least some of the resin parts lie on any straight line passing through any point within the separation membrane pair. This is because this configuration is effective in enhancing the bending modulus and maximum bending stress as measured in any direction.

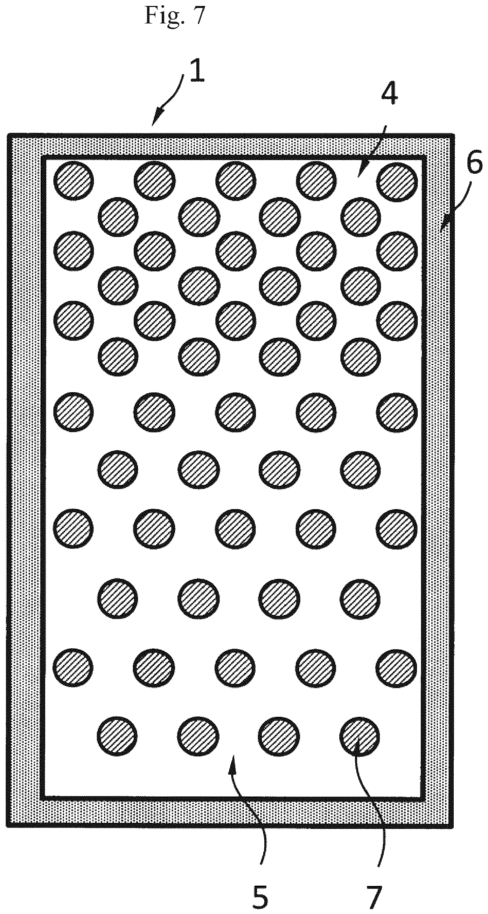

In the flat-membrane type separation membrane element of the present invention, the region where the bending modulus and the maximum bending stress satisfy the aforementioned ranges is required to account for at least 10% of the filtration region of the separation membrane pair. For example, in a rectangular separation membrane pair, the upper 10% area is the only region where resin parts have been disposed on at least some of a transverse-direction line located at any position in the vertical direction, as shown in Fig. 7. This element hence has a structure wherein the upper 10% region is a region where the aforementioned ranges of bending modulus and maximum bending stress are satisfied and the lower 90% region is a region where resin parts have been disposed so as to leave a given spacing therebetween in the vertical direction. In the lower 90% region, the bending modulus and the maximum bending stress may be outside the aforementioned ranges.

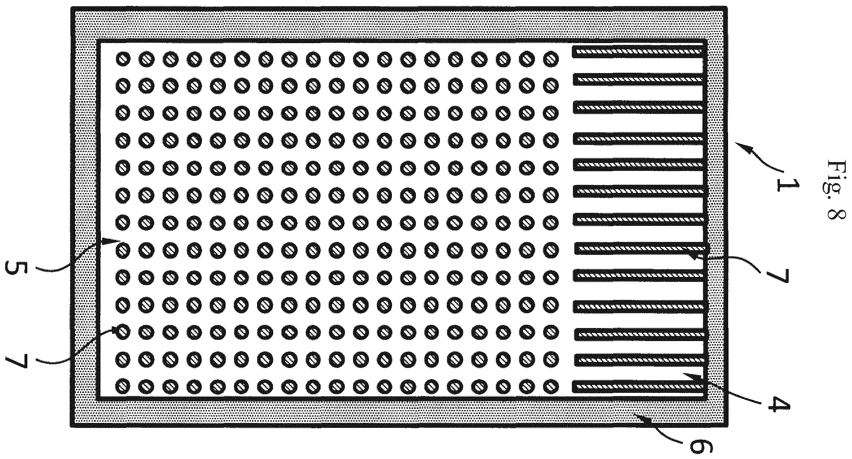

A resin may have been formed in a stripe arrangement only in the upper 10% region and in a dot arrangement in the remaining 90% region, as shown in Fig. 8.

However, the larger the filtration region where the bending modulus and the maximum bending stress satisfy the aforementioned ranges, the better the element is from the standpoint of the vibration and strength of the flat-membrane type separation membrane element. The proportion thereof is preferably 50% or higher, more preferably 90% or higher, even more preferably 100%.

As the proportion of the filtration region where the bending modulus and the maximum bending stress satisfy the aforementioned ranges increases, the flat-membrane type separation membrane element is less apt to be damaged and can be more stably operated over a long period of time.

The projected images of the resin parts (projections), which are obtained by projecting the resin parts on a separation membrane, are intermittent in at least one direction. Namely, on one separation membrane, two or more resin parts (projections) are disposed at interval in a direction on the plane of the separation membrane.

A preferred arrangement pattern for the resin parts (projections) is one in which the resin parts have been disposed intermittently in both the vertical direction and the transverse direction, from the standpoints of ensuring a channel for a separation-membrane permeate to the water collection nozzle which will be described later and attaining a reduction in pressure loss. When the resin parts have been disposed intermittently in both the vertical direction and the transverse direction, a channel for the permeate can be secured and the pressure loss can be reduced.

In this respect, the ratio of the pure-water permeation coefficient of the flat-membrane type separation membrane element to the pure-water permeation coefficient of the separation membranes [(pure-water permeation coefficient of the flat-membrane type separation membrane element)/(pure-water permeation coefficient of the separation membranes)] is preferably 0.02 or larger.

When the pure-water permeation coefficient of the flat-membrane type separation membrane element is at least 0.02 times the pure-water permeation coefficient of the separation membranes, a sufficient filtration rate can be secured when this flat-membrane type separation membrane element is set in a flat-membrane type separation membrane module and the module is operated.

When the pure-water permeation coefficient of the flat-membrane type separation membrane element is less than 0.02 times the pure-water permeation coefficient of the separation membranes, an operation of the module undesirably results in a reduced filtration rate, making it necessary to operate the module at a higher pressure.

The pure-water permeation coefficient of a flat-membrane type separation membrane element can be determined by disposing the flat-membrane type separation membrane element in a water tank to immerse the element in water, subjecting the element to 30-minute suction filtration of a reverse osmosis membrane permeate at 25°C and a water head height of 1 m, subsequently collecting the resultant permeate for 1 minute, and dividing the weight of the permeate by the measuring time, density of the permeate, pressure, and membrane area.

Meanwhile, with respect to maintaining the rigidity of the separation membrane pair, it is preferable that the resin parts (projections) have been disposed so as to extend continuously in the vertical direction. It is hence preferred to determine an arrangement pattern for resin parts (projections) in accordance with a balance between the rigidity of the separation membrane pair and the pressure loss of permeate.

The resin parts (projections) preferably have a minor-axis length of 1-20 mm.

The minor-axis length of the resin parts (projections) is a value obtained by photographing cross-sections of any thirty channel-material projections using a microscope (S-800, manufactured by Keyence Corp.) at a magnification of 10 diameters, analyzing the obtained digital images with an image analysis software (ImageJ) to binarize the data, and calculating a minimum length.

When the minor-axis length of the resin parts (projections) is less than 1 mm, not only it is difficult to form such resin parts so that the flat-membrane type separation membrane element has a desired thickness but also it is difficult to maintain the rigidity of the separation membrane pair. Meanwhile, when the minor-axis length of the resin parts (projections) exceeds 20 mm, the permeate channel becomes narrower and thus the pressure loss in the permeate channel increases, undesirably resulting in a decrease in the pure-water permeation coefficient of the flat-membrane type separation membrane element.

The resin parts (projections) preferably have a major-axis length of 2 mm or larger.

The major-axis length of the resin parts (projections) is a value obtained by photographing cross-sections of any thirty channel-material projections using a microscope (S-800, manufactured by Keyence Corp.) at a magnification of 10 diameters, analyzing the obtained digital images with an image analysis software (ImageJ) to binarize the data, and calculating a maximum length. However, when the resin parts have a major-axis length of 50 mm or larger, the major-axis length can be determined without using a microscope, by measuring the major-axis length with a caliper, ruler, etc.

When the major-axis length of the resin parts (projections) is less than 2 mm, not only it is difficult to form such resin parts so that the flat-membrane type separation membrane element has a desired thickness but also it is difficult to maintain the rigidity of the separation membrane pair. The major-axis length thereof is more preferably 10 mm or larger, even more preferably 15 mm or larger. The major-axis length thereof may be any length up to the length of the separation membranes, and there is no particular upper limit thereon. However, the major-axis length of the resin parts is preferably 100 mm or less. When the major-axis length thereof is 100 mm or less, a permeate channel is easy to secure and the pressure loss in a permeate channel can be prevented.

When the separation membrane pair has a rectangular shape, the longer-side direction of the separation membrane pair may be the longer-side direction of the resin parts (projections) or the shorter-side direction of the separation membrane pair may be the longer-side direction of the resin parts (projections).

When the spacing, in the shorter-side direction of the separation membrane pair, between adjacent resin parts (projections) is small, the separation membrane pair can have increased shorter-side-direction rigidity but the channel for separation-membrane permeate undesirably becomes narrower, undesirably resulting in an increase in pressure loss. Meanwhile, when the spacing, in the shorter-side direction of the separation membrane pair, between resin parts (projections) becomes larger, the permeate channel is wider to attain a reduction in pressure loss but the separation membrane pair has reduced shorter-side-direction rigidity and undesirably has a reduced projected area ratio of resin parts.

In view of these, the spacing, in the shorter-side direction of the separation membrane pair, between resin parts (projections) is preferably 1-30 mm.

When the spacing, in the longer-side direction of the separation membrane pair, between adjacent resin parts (projections) is small, the separation membrane pair can have increased longer-side-direction rigidity but the channel for separation-membrane permeate undesirably becomes narrower, undesirably resulting in an increase in pressure loss. Meanwhile, when the spacing, in the longer-side direction of the separation membrane pair, between resin parts (projections) becomes larger, the permeate channel is wider to attain a reduction in pressure loss but the separation membrane pair has reduced longer-side-direction rigidity and undesirably has a reduced projected area ratio of resin parts.

In view of these, the spacing, in the longer-side direction of the separation membrane pair, between resin parts (projections) is preferably 30 mm or less, more preferably 5-20 mm, even more preferably 8-15 mm.

Next, the permeate collection part, in which a permeate which has permeated the separation membranes is collected, and a nozzle are explained. The permeate collection part and the water collection nozzle in the flat-membrane type separation membrane element of the present invention are not particularly limited so long as the collection part and the nozzle have a structure capable of leading the permeate to a water collection pipe.

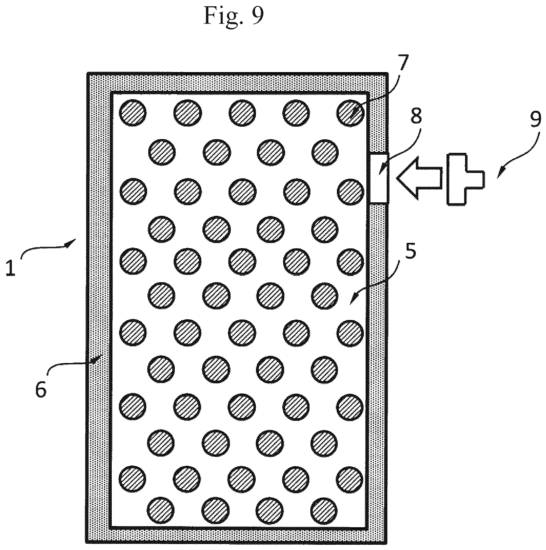

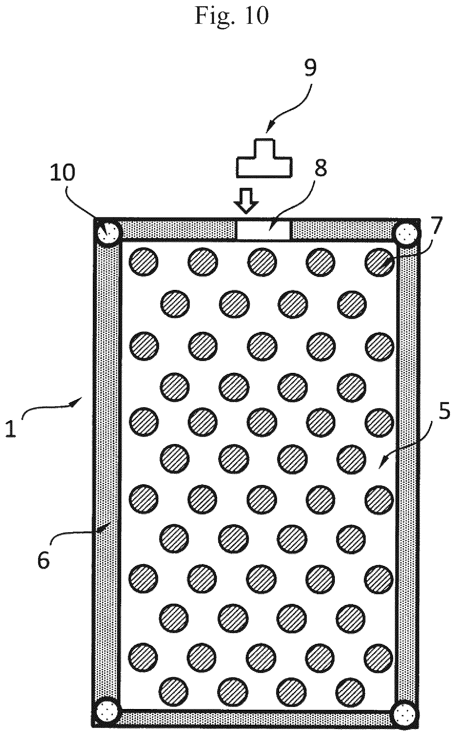

In embodiments of the present invention, a water collection nozzle and a permeate collection part are disposed as shown in Fig. 9 and Fig. 10. Specifically, a permeate collection part is provided in a part of the peripheral sealed part of the separation membranes and a water collection nozzle is disposed in this permeate collection part. The permeate collection part has not been sealed and is sealed after the water collection nozzle is attached thereto.

The water collection nozzle communicates between the water collection channel and the outside of the flat-membrane type separation membrane element. The necessary width and other dimensions of the portion to which the water collection nozzle is to be disposed may be comprehensively determined based on the size of the water collection nozzle to be attached, the size of the flat-membrane type separation membrane element, etc. Usually, however, the diameter of the cylindrical part of the water collection nozzle is about 0.3-3 cm. The water collection nozzle is not particularly limited in the structure, material, etc. thereof, as long as the purpose of taking the permeate out of the flat-membrane type separation membrane element is accomplished. For example, a nozzle made of a resin can be used.

With respect to the position where a water collection nozzle is to be disposed, the water collection nozzle may be disposed in a part of a lateral-side sealing part of the flat-membrane type separation membrane element as shown in Fig. 9 or may be disposed in a part of the upper sealing part of the flat-membrane type separation membrane element as shown in Fig. 10. Besides being disposed in only one part, a water collection nozzle may be disposed in a plurality of positions of the sealing part.

The water collection nozzle includes an upper hollow member and a lower hollow member. The lower part of the water collection nozzle includes two curved surfaces which are disposed so as to form a hollow therebetween, with the lower end open and the upper end closed to form a substantially flat portion, the upper flat portion having an opening substantially at the center thereof. A cylindrical member (upper hollow member) having an oval or circular cross-sectional shape is connected to the opening to configure the water collection nozzle.

Possible methods for sealing the water collection nozzle include a method based on thermal fusion and a method in which an adhesive is used. Methods for the sealing are not particularly limited. It may be possible to use thermal fusion in combination with an adhesive in order to more reliably seal the nozzle.

The portion which is to be attached is not particularly limited in the shape thereof. An appropriate one may be selected in accordance with the size of the flat-membrane type separation membrane element, the size and shape of the water collection nozzle, etc.

When the separation membranes have an approximately rectangular shape, the separation membrane pair preferably has a length in one direction of 300-2,000 mm When the one-direction length of the separation membrane pair is within that range, a flat-membrane type separation membrane module including such flat-membrane type separation membrane elements set therein can be operated while regulating the fluttering of the flat-membrane type separation membrane elements in a proper range.

When the one-direction length of the separation membrane pair is less than 300 mm, this flat-membrane type separation membrane element flutters insufficiently, and hence that is undesirable. Meanwhile, when the one-direction length of the separation membrane pair exceeds 2,000 mm, this flat-membrane type separation membrane element flutters excessively and there is hence a possibility that adjacent membrane faces come into contact with each other, making it necessary to increase the membrane-to-membrane distance. Increasing the membrane-to-membrane distance undesirably results in a decrease in the number of membrane elements which can be packed into a flat-membrane type separation membrane module.

When the separation membranes have an approximately rectangular shape, the separation membrane pair preferably satisfies $0.75 \times E1 \times L2/L1 \leq E2 \leq 1.25 \times E1 \times L2/L1$, where L1 is the longer-side-direction length of the separation membrane pair, E1 is the longer-side-direction bending modulus thereof, L2 is the shorter-side-direction length thereof, and E2 is the shorter-side-direction bending modulus thereof.

When the relationship between the lengths and bending moduli of the separation membranes falls within a range which satisfies the relational expression, the flat-membrane type separation membrane elements flutter not in one direction only but in a plurality of directions. That relationship is hence preferred.

The separation membrane pair more preferably satisfies

$$0.9 \times E1 \times L2/L1 \leq E2 \leq 1.1 \times E1 \times L2/L1.$$

3. Element Unit

The element unit includes a housing frame and a plurality of flexible flat-membrane type separation membrane elements which are arranged in parallel inside the housing frame so as to maintain a gap between the elements in a horizontal direction.

The phrase "flat-membrane type separation membrane elements arranged in parallel" means that flat-membrane type separation membrane elements are vertically disposed so that the separation-membrane faces of adjacent flat-membrane type separation membrane elements face each other.

The flat-membrane type separation membrane elements have been fixed at any of the peripheral edge parts.

The phrase "the flat-membrane type separation membrane elements have been fixed at any of the peripheral edge parts" means that a part of the sealed part of each flat-membrane type separation membrane element has been connected directly or indirectly to the housing frame so that the flat-membrane type separation membrane element is integrated with the housing frame.

Examples of methods for connecting the sealed part of each flat-membrane type separation membrane element to the housing frame include a method in which grooves having the same width as the flat-membrane type separation membrane element are formed in the housing frame to directly fix the flat-membrane type separation membrane element to the housing frame.

Another method is as follows. Through holes are formed in the sealed part of each flat-membrane type separation membrane element, and shafts are disposed to pass through the through holes of the elements, thereby connecting and integrating the elements. Spacers are disposed between the corresponding through holes of the flat-membrane type separation membrane elements, i.e., on both the horizontal-direction left-hand side and right-hand side of each flat-membrane type separation membrane element, so that each flat-membrane type separation membrane element is in close contact with such spacers. Thus, the flat-membrane type separation membrane elements are each fixed at the four corners so that the elements do not move in the horizontal direction. The shafts which pierce both the flat-membrane type separation membrane elements and the spacers are fixed to a housing frame, thereby indirectly fixing the flat-membrane type separation membrane elements to the housing frame.

There are no particular limitations on methods for fixing the flat-membrane type separation membrane elements so long as the flat-membrane type separation membrane elements fixed in the element unit of the flat-membrane type separation membrane module have a maximum deflection in the range of 0.5-3.0 mm when a load of 0.1 N is applied thereto.

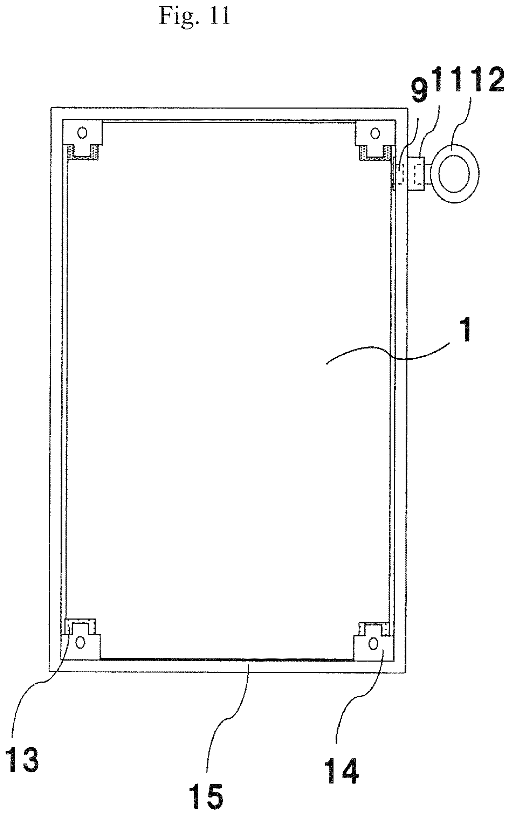

Figs. 11 to 13 are front views which illustrate embodiments of the element unit of the present invention.

In the embodiment of Fig. 11, each flat-membrane type separation membrane element has been fixed at the plane-direction four outer corners. The flat-membrane type separation membrane elements each have through holes formed in the sealing part at the plane-direction four outer corners thereof, and shafts have been disposed to pass through the through holes of the elements, thereby connecting and integrating the elements.

Spacers have been disposed between the corresponding through holes of the flat-membrane type separation membrane elements, i.e., on both the horizontal-direction left-hand side and right-hand side of each flat-membrane type separation membrane element, so that each flat-membrane type separation membrane element is in close contact with such spacers. Thus, the flat-membrane type separation membrane elements have each been fixed at the four corners so that the elements do not move in the horizontal direction.

It is preferable that both ends of each of the shafts, which pierce the spacers, are fixed to the housing frame with fixtures and immobilized. Namely, it is preferable that the fixtures have been fixed to the housing frame and both ends of the shafts are fixed to the fixtures to thereby fix the shafts to the housing frame.

It is preferable that the distance between any two of these shafts is equal to the distance between the corresponding through holes.

When the distance between any two of the shafts is larger than the distance between the corresponding through holes, a heavier burden is imposed around the through holes when the flat-membrane type separation membrane elements flutter, resulting in a possibility that the flat-membrane type separation membrane elements might be damaged. Meanwhile, when the distance between any two of the shafts is smaller than the distance between the corresponding through holes, the flat-membrane type separation membrane elements are held in a bent state and, hence, a local burden is imposed on the flat-membrane type separation membrane elements, resulting in a possibility that the flat-membrane type separation membrane elements might be damaged.

It is preferable that each flat-membrane type separation membrane element has been fixed so that the through holes do not move in membrane-plane directions. This can be attained, for example, by a configuration in which each shaft is in close contact with the through hole or a configuration in which the space between each through hole and the shaft has been filled with some of the spacers.

When the flat-membrane type separation membrane element has a structure in which the through holes can move in membrane-plane directions, there is a possibility that when the flat-membrane type separation membrane element flutters, each through hole might collide with the shaft to damage the flat-membrane type separation membrane element.

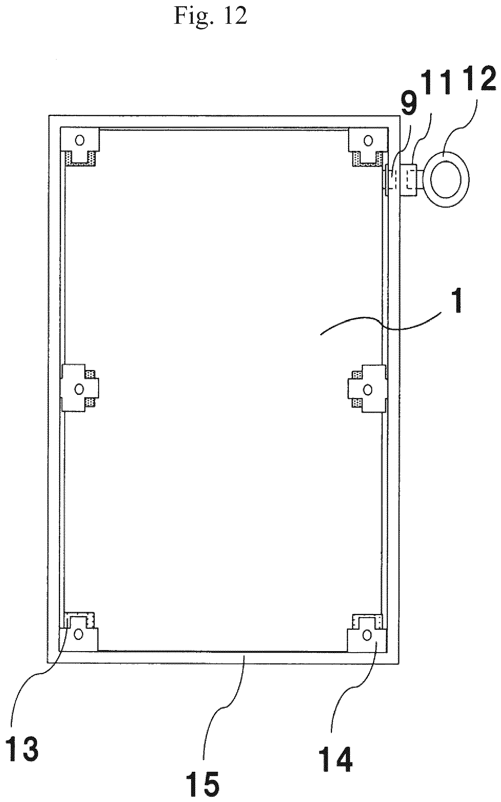

In the embodiment of Fig. 12, the flat-membrane type separation membrane elements each have through holes at the plane-direction four outer corners and at the midpoints of the two longer sides, and shafts have been disposed to pass through the through holes and spacers, thereby connecting and integrating the elements.

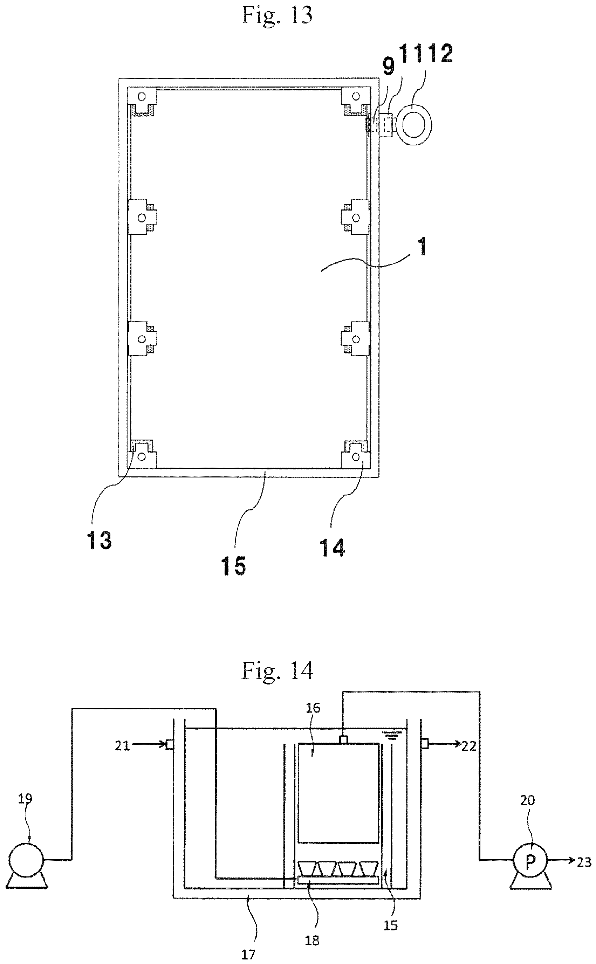

In the embodiment of Fig. 13, the flat-membrane type separation membrane elements each have through holes at the plane-direction four outer corners and at the points whereby the two longer sides are each divided into three equal parts, and shafts have been disposed to pass through the through holes and spacers, thereby connecting and integrating the elements.

The flat-membrane type separation membrane elements each have a maximum deflection of 0.5-3.0 mm, preferably 1.0-2.5 mm, when a load of 0.1 N is applied to a membrane surface most apart from the fixed parts of the flat-membrane type separation membrane element.

The term "maximum deflection of a flat-membrane type separation membrane element" means a maximum value of the deflection of the membrane of the flat-membrane type separation membrane element in a state in which a weight has been placed on a membrane surface.

The maximum deflection can be determined by inserting shafts respectively into the through holes of one flat-membrane type separation membrane element, disposing spacers at the positions of the through holes to thereby bring the flat-membrane type separation membrane element into close contact with the spacers, fixing the spacers to the shafts with fixtures so that the flat-membrane type separation membrane element is perpendicular to the shafts, fixing both ends of the shafts, which pierce the flat-membrane type separation membrane element and the spacers, to a housing frame with fixtures, disposing the housing frame so that the membrane faces are parallel with the floor surface, placing a 10-g weight on a membrane surface most apart from the fixed parts of the flat-membrane type separation membrane element fixed in the housing frame, and examining this flat-membrane type separation membrane element from a lateral direction thereof to measure the resultant deflection thereof.

When the maximum deflection of the flat-membrane type separation membrane element under a load of 0.1 N is within that range, this flat-membrane type separation membrane element can be vibrated at a larger amplitude by air diffusion. The suspended matter which has adhered to the membrane faces can hence be efficiently removed.

When the maximum deflection thereof is smaller than 0.5 mm, this flat-membrane type separation membrane element has high rigidity and vibrates at a reduced amplitude. Meanwhile, when the maximum deflection thereof exceeds 3.0 mm, this flat-membrane type separation membrane element has high flexibility and hence vibrates at a reduced wavelength and at a reduced amplitude.

Spacers have been disposed between the adjacent flat-membrane type separation membrane elements in order to secure channels for water to be treated and air. The spacers have a platy or annular shape, and the plan-view shape thereof can be any shape selected from among not only circular shapes but also quadrilateral, oval, rhombic, and other shapes. These shapes each have a through hole for passing a shaft therethrough.

The material making each spacer desirably is one in which at least the faces thereof which are in contact with adjacent flat-membrane type separation membrane elements are made of either a material having a Durometer hardness (Type A), as measured in accordance with ISO 7169-1, of 20-95 degrees or a plastic material having a Rockwell hardness (Scale R), as measured in accordance with ISO 2039-1, of 50-130 degrees. The lower spacers and the upper spacers are more preferably made of a material having a Durometer hardness (Type A) of 20-95 degrees.

Examples of the material having a Durometer hardness (Type A), as measured in accordance with ISO 7169-1, of 20-95 degrees include various rubber materials having such a Durometer hardness (Type A), such as urethane, nitrile, chloroprene, ethylene, butyl, fluoro, silicone, and low-elasticity rubbers.

Examples of the plastic material having a Rockwell hardness (Scale R), as measured in accordance with ISO 2039-1, of 50-130 degrees include general-purpose plastics such as poly(ethylene terephthalate), polypropylene, polyethylene, and polycarbonates and general-purpose engineering plastics such as nylons, polyacetals, ABS, poly(vinylidene fluoride), and tetrafluoroethylene resins.

The spacing between adjacent flat-membrane type separation membrane elements which is maintained by the spacers is preferably 2-10 mm.

When the spacing between adjacent flat-membrane type separation membrane elements which is maintained by the spacers is less than 2 mm, there is a possibility that solid matter, e.g., flocculated sludge, contained in the liquid being treated might clog the space between the adjacent flat-membrane type separation membrane elements during operation, resulting in reduction of the throughput capacity. Meanwhile, when the spacing between adjacent flat-membrane type separation membrane elements exceeds 10 mm, the number of flat-membrane type separation membrane elements which can be set in the element unit decreases undesirably. Such too large spacing is hence undesirable.

It is preferable that the maximum deflection of each flat-membrane type separation membrane element under a load of 0.1 N applied to a membrane surface most apart from the fixed parts is less than one-half the spacing between the adjacent flat-membrane type separation membrane elements. When the maximum deflection thereof is larger than one-half the spacing between the adjacent flat-membrane type separation membrane elements, there is a possibility that the vibration of the flat-membrane type separation membrane elements caused by air diffusion might bring the opposed membrane faces of adjacent flat-membrane type separation membrane elements into contact with each other, resulting in a decrease in effective filtration area.

The material of the housing frame can be any material selected from among, for example, various metals including stainless steel and aluminum, various thermoplastic resins including PVC resins and ABS resins, and various thermosetting resins including polyurethane resins and epoxy resins. However, stainless steel, which has high corrosion resistance and rigidity, is suitable for use.

The material of the shafts can be any material selected from among, for example, various metals including stainless steel and aluminum, various thermoplastic resins including PVC resins and ABS resins, and various thermosetting resins including polyurethane resins and epoxy resins. However, stainless steel, which has high corrosion resistance and rigidity, is suitable for use. Either solid shafts or hollow shafts may be used so long as the function of connection can be performed. The cross-sectional shape of the shafts is not limited to round shapes and may be any desired shape, e.g., an oval shape or an approximately quadrilateral shape.

4. Flat-membrane Type Separation Membrane Module

The flat-membrane type separation membrane module includes the element unit, an aeration block, and a water collection pipe. The aeration block has been disposed below the element unit. The aeration block includes an air diffusion device connected to a blower. Air is jetted from the underlying aeration block toward the element unit of the flat-membrane type separation membrane module immersed in water to be treated which is contained in a membrane immersion type tank.

A method for using the flat-membrane type separation membrane module is explained based on the sewage/wastewater treatment device shown as an example in Fig. 14. In Fig. 14, a flat-membrane type separation membrane module includes a plurality of flat-membrane type separation membrane elements and a housing, where the elements have been housed in the housing in parallel with each other so that a space is formed between the opposed membrane faces of the adjacent flat-membrane type separation membrane elements. The flat-membrane type separation membrane module is used in the state of being immersed in the water to be treated, e.g., organic wastewater, contained in a separation membrane immersion type water tank. The flat-membrane type separation membrane module includes a plurality of flat-membrane type separation membrane elements vertically packed therein and an air diffusion device disposed as an air-diffusing means below the elements. The air diffusion device supplies a gas from the blower to the membrane faces of the separation membranes. A pump for sucking permeate has been disposed downstream from the flat-membrane type separation membrane module.

An air diffusion pipe is generally used as the air diffusion device. The air diffusion pipe is not particularly limited in the structure thereof so long as air can be supplied thereby. However, preferred are: an air diffusion pipe including a main pipe having many air diffusion holes with a diameter of about 1-10 mm; and an air diffusion pipe which includes a main pipe and an elastic material wound therearound and having many slits formed therein so that many fine air bubbles can be released from the slits when the elastic material is swelled by air pressure.

It is preferred to form the air diffusion pipe so as to have a shape according to the size of the treatment tank or the size of the separation membrane module. The shape of the air diffusion pipe may be linear or in a U-shape or in a zigzag shape.

The material of the air diffusion pipe is not particularly limited. However, metals such as stainless steel, resins such as acrylonitrile/butadiene/styrene rubbers (ABS resins), polyethylene, polypropylene, and vinyl chloride, composite materials such as fiber-reinforced resins (FRP), and the like are preferred.

In the sewage/wastewater treatment device thus configured, the liquid to be treated, such as wastewater, passes through the separation membranes of the flat-membrane type separation membrane elements by the suction force of the pump. During the passing, suspended substances contained in the liquid to be treated, such as microbial particles and inorganic particles, are filtered off. The permeate which has passed through the separation membranes flows into the permeate side of the separation membranes, passes through the water collection nozzles disposed at ends of the flat-membrane type separation membrane elements, and is then taken out from the separation membrane immersion type water tank via the pump. Meanwhile, simultaneously with the filtration, the air diffusion device releases air bubbles, which cause flows parallel with the membrane faces of the flat-membrane type separation membrane elements. The flows remove the suspended matter which has accumulated on the membrane faces.

The equivalent spherical diameter (hereinafter often referred to simply as "bubble diameter") of diffused air bubbles which pass through the gap between adjacent flat-membrane type separation membrane elements and the spacing between the adjacent flat-membrane type separation membrane elements (hereinafter often referred to simply as "spacing between adjacent membranes") have the following relationship. The larger the value of (bubble diameter)/(spacing between adjacent membranes), the higher the shearing stress whereby the membrane faces are sheared by the air bubbles. This is because the larger the value thereof, not only the larger the amount in which the liquid to be filtered is pushed aside by the air bubbles but also the longer the period during which the air bubbles are in contact with the membrane faces. Namely, the larger the value thereof, the more the flows are disturbed. Consequently, when the diameter of the diffused air bubbles is the same, the membrane face shearing stress and the membrane face cleaning force become higher as the distance between adjacent membranes decreases.

The flat-membrane type separation membrane elements of the present invention vibrate as stated above. When the flat-membrane type separation membrane elements vibrate, the spacing between adjacent membranes fluctuates and alternately becomes larger than and smaller than the spacing maintained by the spacers.

When the spacing between adjacent membranes has increased, the value of (bubble diameter)/(spacing between adjacent membranes) becomes smaller and, hence, the membrane face shearing stress becomes lower. Meanwhile, when the spacing between adjacent membranes has decreased, the value of (bubble diameter)/(spacing between adjacent membranes) becomes larger and, hence, the membrane face shearing stress becomes higher. However, the increase amount of the membrane face shearing stress due to the decrease in the spacing between adjacent membranes is larger than the decreased amount of the membrane face shearing stress due to the increase in the spacing between adjacent membranes. Consequently, the membrane face shearing stress advantageously increases upon the vibration of the flat-membrane type separation membrane elements.

In a method for operating the flat-membrane type separation membrane module of the present invention, it is preferable that the proportion of diffused air bubbles having a volume of 0.5 mm$^3$ or larger which satisfy (bubble diameter) / (spacing between adjacent membranes) >0.6 during the operation is 50-90%, from the standpoint of removing suspended matter which has accumulated on the membrane faces.

The "proportion of diffused air bubbles which satisfy (bubble diameter) / (spacing between adjacent membranes) >0.6" is explained below.

The spacing between membranes fluctuates from portion to portion and with the lapse of time, due to the fluttering of the flat-membrane type separation membrane elements which occurs when one air bubble passes through the space between the membranes. The (bubble diameter) and the (spacing between adjacent membranes) at each of points of time during the passing are determined by an image analysis to calculate a distribution of (bubble diameter) / (spacing between adjacent membranes).

With respect to all the observed diffused air bubbles each having a volume of 0.5 mm$^3$ or larger, the proportion of the number of data values which satisfy (bubble diameter) / (spacing between adjacent membranes) > 0.6 to the number of all the data values is calculated. An average value of such proportions is referred to as the "proportion of diffused air bubbles which satisfy (bubble diameter) / (spacing between adjacent membranes) > 0.6".

When the proportion is less than 50%, the proportion of air bubbles having high shearing stress is small and, hence, the effect of cleaning the membrane faces is low undesirably. Meanwhile, when the proportion exceeds 90%, the air bubbles have an exceedingly large diameter or that the spacing between adjacent membranes is exceedingly small. In case where the air bubbles have an exceedingly large diameter, the number of the diffused air bubbles becomes smaller and there is a concern that the dissolved-oxygen efficiency may decrease undesirably, thereby impairing the properties of the activated sludge.

Meanwhile, in case where the spacing between adjacent membranes is exceedingly small, the flat-membrane type separation membrane elements undesirably vibrate at a reduced amplitude, making it impossible to obtain a sufficiently high cleaning effect.

In a method for operating the flat-membrane type separation membrane module of the present invention, the module in which an air diffusion pipe has been disposed below the element unit, is operated while diffusing air from below the element unit. It is necessary to operate the module so that the flat-membrane type separation membrane elements flutter at a vibrational energy of 0.2-0.5 mN/m. The maximum of the values of vibrational energy respectively exhibited by portions of the flat-membrane type separation membrane elements is taken as the vibrational energy of the flat-membrane type separation membrane elements.

When the vibrational energy thereof is within that range, it is possible to operate the module while attaining both the cleaning of membrane faces by the vibration and operation stability.

When the vibrational energy thereof is less than 0.2 mN/m, the cleaning effect of vibration is low and, hence, a reduction in air diffusion rate cannot be attained. Meanwhile, when the vibrational energy thereof exceeds 0.5 mN/m, the vibration occurs at too high an amplitude. Because of this, there is a possibility that contact between flat-membrane type separation membrane elements might occur, and the module cannot be stably operated over a long period of time.

The fluttering of the flat-membrane type separation membrane elements is not a simple harmonic motion. There are hence cases where the elements temporarily show a vibrational energy outside the range of 0.2-0.5 mN/m as in the case where a coalesced air bubble ascends between flat-membrane type separation membrane elements. With respect to the vibrational energy of the flat-membrane type separation membrane elements during an operation in which air diffusion is conducted from below the elements, it is more preferable that the time period during which the vibrational energy is within that range accounts for at least 75% of the air diffusion period. This is because this operation can be performed while attaining both the cleaning of membrane faces by the vibration and operation stability.

The vibrational energy is calculated from the weight, amplitude, frequency, and membrane area of each flat-membrane type separation membrane element. The amplitude and the frequency are determined by the rigidity of the flat-membrane type separation membrane element, air diffusion conditions, size of the flat-membrane type separation membrane element, method used for fixing the flat-membrane type separation membrane element, viscosity of the water to be treated, form of the immersion type tank, etc.

Specifically, when the flat-membrane type separation membrane module is being operated, the state of a flat-membrane type separation membrane element is first examined by taking images of each of ten equal parts into which the flat-membrane type separation membrane element has been divided in the height direction, from a lateral direction of the flat-membrane type separation membrane element with a high-speed camera for 10 seconds. Subsequently, images of each of the height-direction ten portions of an adjacent flat-membrane type separation membrane element are taken.

Amplitudes and frequencies are calculated from the positional fluctuations of each flat-membrane type separation membrane element. The vibrational energy is calculated from the weight, amplitudes, frequencies, and membrane area of the flat-membrane type separation membrane element.

It is preferable that diffused air bubbles, when passing through the space between adjacent membranes, have an average ascending speed of 0.5-6.0 m/min.

The average ascending speed of the air bubbles is determined by the rate at which air bubbles are diffused from the air diffusion device and by the spacing between the membranes and the width of the membranes.

When the average ascending speed of the air bubbles is less than 0.5 m/min, this means that the air diffusion rate is exceedingly low or that the spacing between the membranes is exceedingly large, making it impossible to obtain a sufficient membrane face cleaning effect. Meanwhile, when the average ascending speed of the air bubbles exceeds 6.0 m/min, this means that the air diffusion rate is exceedingly high or that the spacing between the membranes is exceedingly small. In case where the air diffusion rate is exceedingly high, an increased quantity of energy is required for the air diffusion, resulting in an increase in operation cost, and this is undesirable.

In case where the spacing between the membranes is exceedingly small, the flat-membrane type separation membrane elements flutter at a reduced amplitude, and this is undesirable.

The average ascending speed of the air bubbles is more preferably 1.0-3.0 m/min.

The average ascending speed of air bubbles can be determined by taking images of the air bubbles with a high-speed camera from a lateral direction of the flat-membrane type separation membrane elements during operation in the same manner as described above and analyzing the captured images to calculate the average ascending speed.

At the time when the module is operated, the viscosity of the liquid being treated is preferably 100 mPa·s or less. When the viscosity of the liquid being treated is higher than 100 mPa·s, the increased viscosity may reduce the fluttering of the flat-membrane type separation membrane elements, making it sometimes impossible to obtain the desired effect.

EXAMPLES

The present invention is described below in more detail with reference to Examples. However, the present invention should not be construed as being limited by the following Examples.

(Example 1)

Poly(vinylidene fluoride) (PVDF; weight-average molecular weight, 280,000) was used as a resin ingredient for a membrane-forming solution. Use was further made of poly(ethylene glycol) (PEG20,000; weight-average molecular weight, 20,000) as a pore-forming agent, N,N-dimethylformamide (DMF) as a solvent, and $H_2O$ as a nonsolvent. These were sufficiently stirred together at a temperature of 95°C to produce a membrane-forming solution having the following composition.

Poly(vinylidene fluoride) (PVDF): 13.0% by weight

Poly(ethylene glycol) (PEG20,000): 5.5% by weight
N,N-dimethylformamide (DMF): 78.0% by weight
$H_2O$: 3.5% by weight

A rectangular embossed nonwoven polyester-fiber fabric having a width of 50 cm and a length of 150 cm and having an apparent density of 0.6 $g/cm^3$ and a dense fusion ratio of 25% was used as a substrate. The membrane-forming solution above was cooled to 30°C and then applied onto the substrate. Immediately after the application, the coated substrate was immersed in 20°C pure water for 5 minutes and then immersed in 90°C hot water for 2 minutes to rinse the substrate to remove the N,N-dimethylformamide as a solvent and the poly(ethylene glycol) as a pore-forming agent.

Thereafter, the substrate was immersed for 30 minutes in a 20% by weight aqueous solution of a surfactant (polyoxyethylene sorbitan monooleate) and then dried in a 75°C hot-air drying oven for 30 minutes to produce a separation membrane.

Two sheets each having a length of 800 mm and a width of 480mm were cut out of the separation membrane obtained. A polypropylene resin (trade name, L-MODU S901; manufactured by Idemitsu Kosan Co., Ltd.) was applied at a resin temperature of 150°C to the permeate-side face of one of the two separation membrane sheets using a robot dispenser (trade name, Shotmaster 400ΩX; manufactured by Musashi Engineering, Inc.) in accordance with a pattern arrangement such as that shown in Fig. 2. The size and pattern of the resin parts formed by the application were such that forty-five resin parts each having a length of 760 mm and a width of 4 mm had been formed so as to leave a spacing of 6 mm therebetween in the width direction. The resin parts had a height of 1 mm.

Meanwhile, the resin was applied to a peripheral part, i.e., a peripheral sealing part, of the other separation membrane sheet so that the whole periphery, except the area where a water collection nozzle was to be disposed, was coated with the resin having a width of 5 mm and a height of 1 mm.

Thereafter, one of the separation membrane sheets was placed on the other separation membrane sheet so that the permeate-side faces thereof faced each other, and aluminum plates were disposed as spacers around the separation membrane sheets. The two separation membrane sheets were sandwiched, together with the spacers, between two 3-mm-thick plates for thickness regulation. This assemblage was allowed to stand still in a 95°C oven for 5 minutes to bond the permeate-side faces of the separation membrane sheets to each other.

Furthermore, a water collection nozzle was attached to an upper part of a lateral side of the peripheral part of the flat-membrane type separation membrane element and through holes were formed in the four corners, as shown in Fig. 10. Thus, a flat-membrane type separation membrane element was produced.

A flat-membrane type separation membrane module was produced by disposing ten such flat-membrane type separation membrane elements in parallel with each other in a water tank, passing shafts respectively through the through holes formed in the four corners of each element to fix the four corners while maintaining the spacing between the adjacent flat-membrane type separation membrane elements with spacers having a thickness of 6 mm, and disposing an air diffusion pipe below the elements.

The module was operated while regulating the air diffusion rate to 10 L/min per flat-membrane type separation membrane element.

(Example 2)

A flat-membrane type separation membrane element, an element unit, and a flat-membrane type separation membrane module were produced in the same manner as in Example 1, except that the resin to be disposed on the permeate side of the separation membrane sheets was replaced with an ethylene/vinyl acetate copolymer resin (trade name, 703A; manufactured by TEX YEAR INDUSTRIES INC.).

(Example 3)

A flat-membrane type separation membrane element, an element unit, and a flat-membrane type separation membrane module were produced in the same manner as in Example 1, except that the resin to be disposed on the permeate side of the separation membrane sheets was replaced with a polypropylene resin (trade name, L-MODU S400; manufactured by Idemitsu Kosan Co., Ltd.).

(Example 4)

A flat-membrane type separation membrane element, an element unit, and a flat-membrane type separation membrane module were produced in the same manner as in Example 1, except that the resin to be disposed on the permeate side of the separation membrane sheets was replaced with pellets of a composition composed of 60% by weight highly crystalline polypropylene resin (MFR, 1,000 g/10 min; melting point, 161°C) and 40% by weight lowly crystalline polypropylene resin (trade name, L-MODU S400; manufactured by Idemitsu Kosan Co., Ltd.) and that the composition was applied at a resin temperature of 205°C and the assemblage was allowed to stand in a 165°C oven for 5 minutes.

(Examples 5 to 7)

Flat-membrane type separation membrane elements, element units, and flat-membrane type separation membrane modules were produced in the same manner as in Example 1, except that the spacing between the resin parts disposed on the permeate-side face of a separation membrane sheet was changed as shown in tables which will be given later.

(Examples 8 to 10)

Flat-membrane type separation membrane elements, element units, and flat-membrane type separation membrane modules were produced in the same manner as in Example 1, except that the minor-axis length of the resin parts disposed on the permeate-side face of a separation membrane sheet was changed as shown in tables which will be given later.

(Examples 11 to 14)

Flat-membrane type separation membrane elements, element units, and flat-membrane type separation membrane modules were produced in the same manner as in Example 1, except that the pattern of arrangement of the resin parts disposed on the permeate-side face of a separation membrane sheet was changed to those shown in Figs. 3 to 6.

(Example 15)

A flat-membrane type separation membrane element, an element unit, and a flat-membrane type separation membrane module were produced in the same manner as in Example 1, except that the pattern of arrangement of the resin parts disposed on the permeate-side face of a separation membrane sheet was changed to that shown in Fig. 1 and that the resin to be disposed on the permeate side of the separation membrane sheets was replaced with a polypropylene resin (trade name, L-MODU S901; manufactured by Idemitsu Kosan Co., Ltd.).

(Example 16)

A flat-membrane type separation membrane element, an element unit, and a flat-membrane type separation membrane module were produced in the same manner as in Example 15, except that the axis lengths of and the spacing between the resin parts were changed as shown in a table which will be given later.

(Example 17)

A flat-membrane type separation membrane element, an element unit, and a flat-membrane type separation membrane module were produced in the same manner as in Example 15, except that the pattern of arrangement of the resin parts disposed on the permeate-side face of a separation membrane sheet was changed to that shown in Fig. 7 and that the major-axis length of and the spacing between the resin parts were changed as shown in a table which will be given later.

(Example 18)

A flat-membrane type separation membrane element, an element unit, and a flat-membrane type separation membrane module were produced in the same manner as in Example 1, except that the pattern of arrangement of the resin parts disposed on the permeate-side face of a separation membrane sheet was changed to that shown in Fig. 8, that the major-axis length of and the spacing between the resin parts were changed as shown in a table which will be given later, and that the resin was applied to the upper portion in the same manner as in Example 1 and to the lower portion in the same manner as in Example 15.

(Examples 19 and 20)

Flat-membrane type separation membrane elements, element units, and flat-membrane type separation membrane modules were produced in the same manner as in Example 1, except that the size of the flat-membrane type separation membrane element was changed as shown in a table which will be given later.

(Example 21)

A flat-membrane type separation membrane element, an element unit, and a flat-membrane type separation membrane module were produced in the same manner as in Example 15, except that the size of the flat-membrane type separation membrane elements was changed as shown in a table which will be given later.

(Example 22)

A flat-membrane type separation membrane element, an element unit, and a flat-membrane type separation membrane module were produced in the same manner as in Example 1, except that the position where the water collection nozzle was to be attached to the flat-membrane type separation membrane element was changed to that shown in Fig. 10.

(Examples 23 and 24)

Flat-membrane type separation membrane elements, element units, and flat-membrane type separation membrane modules were produced in the same manner as in Example 15, except that the method for fixing the flat-membrane type separation membrane elements was changed to those shown in Figs. 12 and 13.

(Example 25)

A flat-membrane type separation membrane element, an element unit, and a flat-membrane type separation membrane module were produced in the same manner as in Example 1, except that the thickness of the spacers was changed to 4 mm.

(Example 26)

A flat-membrane type separation membrane element, an element unit, and a flat-membrane type separation membrane module were produced in the same manner as in Example 1, except for the following.
The resin was not directly disposed on the permeate-side face of a separation membrane sheet but applied to both faces of a nonwoven fabric (polyester fibers having a density of 0.5 g/cm$^3$ and a thickness of 50 $\mu$m) in accordance with a pattern arrangement such as that shown in Fig. 2, as in Example 1. The nonwoven fabric having the resin parts formed thereon was interposed between two sheets of the separation membrane, and this stack was sandwiched between two 3-mm-thick thickness plates and allowed to stand still in a 95°C oven for 5 minutes to adhere the resin to the permeate-side faces of the separation membrane sheets.

(Comparative Example 1)

A flat-membrane type separation membrane element, an element unit, and a flat-membrane type separation membrane module were produced in the same manner as in Example 1, except that the pattern of arrangement of the resin parts disposed on the permeate-side face of a separation membrane sheet was changed to that shown in Fig. 1.

(Comparative Example 2)

A flat-membrane type separation membrane element and a flat-membrane type separation membrane module were produced in the same manner as in Example 1, except that a net (polyethylene; thickness, 1 mm; pitch, 6 mm $\times$ 6 mm) was used as a channel material in place of the resin parts disposed on the permeate side of the separation membrane sheets.

(Comparative Example 3)

A flat-membrane type separation membrane element and a flat-membrane type separation membrane module were produced in the same manner as in Example 1, except that a tricot (poly(ethylene terephthalate); thickness, 1 mm) was used as a channel material in place of the resin parts disposed on the permeate side of the separation membrane sheets.

(Comparative Example 4)

A flat-membrane type separation membrane element and a flat-membrane type separation membrane module were produced in the same manner as in Example 1, except that a porous film (poly(ethylene terephthalate); thickness, 1 mm) was used as a channel material in place of the resin parts disposed on the permeate side of the separation membrane sheets.

(Comparative Example 5)

A flat-membrane type separation membrane element and a flat-membrane type separation membrane module were produced in the same manner as in Example 1, except that a supporting plate (ABS; thickness, 6 mm) was used as a channel material in place of the resin parts disposed on the permeate side of the separation membrane sheets.

(Bonding Strength between Separation Membrane and Channel Material)

In the Examples and the Comparative Examples, the bonding strength was determined in the following manner. A separation membrane pair having dimensions of 15 mm (width) $\times$ 75 mm was produced in which a channel material had been fixed to both permeate-side faces of the separation membranes. The channel material was separated from either of the membrane faces over the longitudinal-direction dimension of 75 mm except the 15-mm central portion, and the opposed membranes were each bent into a U shape. This specimen was set on a tensile tester (trade name, Tensilon RTG-1210; manufactured by A&D Co., Ltd.) by gripping the upper and lower ends of the bent portions. A tensile test was conducted at a speed of 2 mm/min at 25°C and a relative humidity of 65%. The tensile force at the time when the channel material was separated from the face of either of the upper and lower membranes was measured. This measurement was made ten times on separation membrane pairs on the same level, and an average value thereof was taken as the bonding strength. The results thereof are shown in the tables which will be given later.

(Major-axis Length, Minor-axis Length, and Spacing of Channel Material)

In each of the Examples and Comparative Examples, cross-sections of any thirty channel-material projections were photographed using a microscope (S-800, manufactured by Keyence Corp.) at a magnification of 20 diameters and the obtained digital images were analyzed with an image analysis software (ImageJ) to binarize the data, thereby calculating major-axis lengths and minor-axis lengths. An average of the thirty values obtained was taken as the major-axis length or minor-axis length of the channel material. Spacing of the channel material was determined from similar images by analyzing thirty portions with respect to each of the longer-side direction and shorter-side direction of the separation membrane pair and taking an average value thereof as the longer-side-direction spacing and the shorter-side-direction spacing. In the case of any sizes not smaller than 50 mm, the sizes were measured with not a microscope but a ruler. The results thereof are shown in the tables which will be given later.

(Projected Area Ratio of Channel Material)

In the Examples and the Comparative Examples, the projected area ratio was determined in the following manner. Cross-sections of any thirty channel-material projections were photographed using a microscope (S-800, manufactured by Keyence Corp.) at a magnification of 10 diameters, and the obtained digital images were analyzed with an image analysis software (ImageJ) to binarize the data. The proportion of the resin to the filtration region of the membrane face was taken as the projected area ratio. The results thereof are shown in the tables which will be given later.

(Bending Modulus, Maximum Bending Stress, and Areal Proportion)

In the Examples and the Comparative Examples, the bending modulus and the maximum bending stress were determined in the following manner. A separation membrane pair having a width of 48 mm and a length of 80 mm (including a channel material disposed inside the two separation membranes) was produced, and supports were set beneath both ends of the separation membrane pair along the 80-mm length so as to leave a space of 50 mm therebetween. Using a compression tester (Tensilon RTG-1210, manufactured by A&D Co., Ltd.), the center of the membrane element was gradually pressed with an indenter (radius, 5 mm) at a speed of 1.3 mm/min. The bending modulus and the maximum bending stress were calculated from the thus-obtained relationship between displacement and load using the following equations. The results thereof are shown in the tables which will be given later.

In the equations, F denotes bending load, L the distance between the supports, b the width of the test piece, h the thickness of the test piece, s deflection, $\sigma$ bending stress, $\varepsilon$ bending strain, and E bending modulus. The maximum bending stress is a maximum value of σ. The bending modulus was calculated from the values of ΔF and Δs measured when the bending strain determined by equation (1) was 0.25 and 0.5, using equation (3).

The measurement for determining bending modulus and maximum bending stress was made throughout the whole separation membrane pair, and the proportion of the area of regions each satisfying a bending modulus of 100-1,000 MPa and a maximum bending stress of 1-15 MPa to the area of the whole separation membrane pair was calculated as areal proportion. The results thereof are shown in the tables which will be given later.

[Math. 1]

$$\varepsilon = \frac{600sh}{L^2}$$

[Math. 2]

$$\sigma = \frac{3FL}{2bh^2}$$

[Math. 3]

$$E = \frac{L^3}{4bh^3} \times \frac{\Delta F}{\Delta s}$$

(Ratio between Pure-water Permeation Coefficient of Separation Membrane and Pure-water Permeation Coefficient of Flat-membrane Type Separation Membrane Element)

In each of the Examples and Comparative Examples, the pure-water permeation coefficient of the separation membrane was determined by cutting a circular piece having a diameter of 50 mm out of the separation membrane, setting the membrane piece in a cylindrical filtration holder (Ultraholder UHP-43K, manufactured by Advantec Toyo Kaisha, Ltd.), preliminarily passing a reverse osmosis membrane permeate therethrough at 25°C and a pressure of 10 kPa for 5 minutes, successively passing the permeate to collect the resultant permeate for 3 minutes, and calculating the pure-water permeation coefficient of the separation membrane using the following equation.

(Pure-water permeation coefficient) = (weight of the permeate) / (measuring time) / (pressure) / (membrane area) / (density of the permeate)

In each of the Examples and Comparative Examples, the pure-water permeation coefficient of the flat-membrane type separation membrane element was determined by disposing the flat-membrane type separation membrane element in a water tank so that the element was immersed in water, subjecting the element to 30-minute suction filtration of a reverse osmosis membrane permeate at 25°C and a water head height of 1 m, subsequently collecting the resultant permeate for 1 minute, and calculating the pure-water permeation coefficient of the flat-membrane type separation membrane element using the following equation.

(Pure-water permeation coefficient) = (weight of the permeate) / (measuring time) / (pressure) / (membrane area) / (density of the permeate)

The ratio between the pure-water permeation coefficient of the separation membrane and the pure-water permeation coefficient of the flat-membrane type separation membrane element was calculated using the following equation.

(Ratio between pure-water permeation coefficient of separation membrane and pure-water permeation coefficient of flat-membrane type separation membrane element) = (pure-water permeation coefficient of flat-membrane type separation membrane element) / (pure-water permeation coefficient of separation membrane)

The examination was conducted three times with respect to separation membranes on the same level and to flat-membrane type separation membrane elements on the same level, and the average values thereof were used to calculate the ratio between the pure-water permeation coefficient of the separation membrane and the pure-water permeation coefficient of the flat-membrane type separation membrane element. The results thereof are shown in the tables which will be given later.

(Maximum Deflection of Flat-membrane Type Separation Membrane Element)

In the Examples and the Comparative Examples, the maximum deflection was determined in the following manner. Shafts were inserted respectively into the through holes of one flat-membrane type separation membrane element, and spacers were disposed at the positions of the through holes to thereby bring the flat-membrane type separation membrane element into close contact with the spacers. The spacers were fixed to the shafts with fixtures so that the flat-membrane type separation membrane element was perpendicular to the shafts. Both ends of the shafts, which pierced the flat-membrane type separation membrane element and the spacers, were fixed to a housing frame with fixtures.

The housing frame was disposed so that the membrane faces were parallel with the floor surface. A 10-g weight was placed on a membrane surface most apart from the fixed parts of the flat-membrane type separation membrane element fixed in the housing frame, and this flat-membrane type separation membrane element was examined from a lateral direction thereof to measure the resultant deflection thereof. The results thereof are shown in the tables which will be given later.

(Proportion of (bubble diameter) / (spacing between adjacent membranes) >0.6, and Vibrational Energy)

Bubble diameters, the spacing between adjacent membranes, and vibrational energy were determined in the following manners.

First, when a flat-membrane type separation membrane module was being operated, the state of each of adjacent flat-membrane type separation membrane elements was examined by taking images of each of ten equal parts into which the flat-membrane type separation membrane element had been divided in the height direction, from a lateral direction of the flat-membrane type separation membrane element with a high-speed camera for 10 seconds.

With respect to bubble diameter, the images obtained were analyzed to calculate a distribution of the equivalent spherical diameters of air bubbles passing through the space between the adjacent flat-membrane type separation membrane elements. Positional fluctuations of flat-membrane type separation membrane elements were calculated through similar image analysis. Fluctuations in the distance between two adjacent membranes were calculated from the positional fluctuations of two adjacent flat-membrane type separation membrane elements.

The ratio of (bubble diameter) / (spacing between adjacent membranes) was calculated, and the proportion of the number of data values in which that ratio exceeded 0.6 to the number of all the data values was taken as the proportion of diffused air bubbles which satisfied (bubble diameter) / (spacing between adjacent membranes) >0.6. The results thereof are shown in the tables which will be given later.

With respect to vibrational energy, amplitudes and frequencies were calculated from the positional fluctuations of each flat-membrane type separation membrane element, and the vibrational energy was calculated from the amplitudes and frequencies of the separation membrane and the weight of the flat-membrane type separation membrane element using the following equation.

In the equation, I is vibrational energy, m is the weight of the flat-membrane type separation membrane element, A is the amplitudes of the flat-membrane type separation membrane element, f is the frequencies of the flat-membrane type separation membrane element, S is the area of the flat-membrane type separation membrane element, and n is the number of measuring heights.

[Math. 4]

$$I = m \times (1/n) \sum_{i=1}^{n} (A_i^2 f_i^2)/S$$

(Rate of Pressure-difference Increase)

In each of the Examples and Comparative Examples, a flat-membrane type separation membrane module including ten flat-membrane type separation membrane elements was immersed in an activated sludge tank and operated at a permeation flux of 0.5 m/d for 10 days, during which the transmembrane pressure difference was examined chronologically. The average rate of pressure-difference increase per day in this operation was calculated. The results thereof are shown in the following tables.

Table 1

| | | | Example 1 | Example 2 | Example 3 | Example 4 | Example 5 |
|---|---|---|---|---|---|---|---|
| Resin parts | Form | - | stripes (Fig. 2) | stripes (Fig. 2) | stripes (Fig. 2) | stripes (Fig. 2) | stripes (Fig. 2) |
| | Material | - | PP | EVA | PP | PP | PP |
| | Bonding strength | N/m | 2500 | 1200 | 2300 | 1900 | 2500 |
| | Tensile modulus | MPa | 110 | 14 | 90 | 150 | 110 |
| | Major-axis length of channel material | mm | 760 | 760 | 760 | 760 | 760 |
| | Minor-axis length of channel material | mm | 4 | 4 | 4 | 4 | 4 |
| | Spacing of channel material (longer-side direction) | mm | 0 | 0 | 0 | 0 | 0 |
| | Spacing of channel material (shorter-side direction) | mm | 6 | 6 | 6 | 6 | 11 |
| | Projected area ratio of channel material | % | 40 | 40 | 40 | 40 | 27 |
| Element | Length (longer-side direction) | mm | 800 | 800 | 800 | 800 | 800 |
| | Length (shorter-side direction) | mm | 480 | 480 | 480 | 480 | 480 |
| | Bending modulus | MPa | 598 | 309 | 488 | 962 | 343 |
| | Maximum bending stress | MPa | 8.4 | 4.3 | 6.7 | 13.6 | 5.0 |
| | Areal proportion | % | 100 | 100 | 100 | 100 | 100 |
| | Ratio of pure-water permeation coefficient | - | 0.04 | 0.04 | 0.04 | 0.04 | 0.04 |

(continued)

| | | | Example 1 | Example 2 | Example 3 | Example 4 | Example 5 |
|---|---|---|---|---|---|---|---|
| Module | Method of fixing separation membrane elements | - | four-corner fixing (Fig. 11) | four-corner fixing (Fig. 11) | four-corner fixing (Fig. 11) | four-corner fixing (Fig. 11) | four-corner fixing (Fig. 11) |
| | Maximum deflection of separation membrane element under load of 0.1 N | mm | 0.9 | 1.7 | 1.1 | 1.7 | 1.6 |
| | Spacing between elements | mm | 6 | 6 | 6 | 6 | 6 |
| | Proportion of (bubble diameter) / (spacing between adjacent membranes) >0.6 | % | 54 | 52 | 55 | 51 | 55 |
| | Vibrational energy | mN/m | 0.33 | 0.43 | 0.38 | 0.21 | 0.36 |
| | Rate of pressure-difference increase | Pa/d | 50 | 31 | 42 | 62 | 46 |

Table 2

| | | | Example 6 | Example 7 | Example 8 | Example 9 | Example 10 |
|---|---|---|---|---|---|---|---|
| Resin parts | Form | - | stripes (Fig. 2) | stripes (Fig. 2) | stripes (Fig. 2) | stripes (Fig. 2) | stripes (Fig. 2) |
| | Material | - | PP | PP | PP | PP | PP |
| | Bonding strength | N/m | 2500 | 2500 | 2500 | 2500 | 2500 |
| | Tensile modulus | MPa | 110 | 110 | 110 | 110 | 110 |
| | Major-axis length of channel material | mm | 760 | 760 | 760 | 760 | 760 |
| | Minor-axis length of channel material | mm | 4 | 4 | 2 | 10 | 16 |
| | Spacing of channel material (longer-side direction) | mm | 0 | 0 | 0 | 0 | 0 |
| | Spacing of channel material (shorter-side direction) | mm | 16 | 1 | 3 | 15 | 24 |
| | Projected area ratio of channel material | % | 20 | 80 | 40 | 40 | 40 |

(continued)

| | | | | Example 6 | Example 7 | Example 8 | Example 9 | Example 10 |
|---|---|---|---|---|---|---|---|---|
| Element | Length(longer-side direction) | mm | | 800 | 800 | 800 | 800 | 800 |
| | Length(shorter-side direction) | mm | | 480 | 480 | 480 | 480 | 480 |
| | Bending modulus | MPa | | 289 | 474 | 461 | 574 | 602 |
| | Maximum bending stress | MPa | | 4.3 | 9.1 | 6.8 | 7.9 | 8.3 |
| | Areal proportion | % | | 100 | 100 | 100 | 100 | 100 |
| | Ratio of pure-water permeation coefficient | - | | 0.04 | 0.04 | 0.04 | 0.04 | 0.04 |
| Module | Method of fixing separation membrane elements | - | | four-corner fixing (Fig. 11) | four-corner fixing (Fig. 11) | four-corner fixing (Fig. 11) | four-corner fixing (Fig. 11) | four-corner fixing (Fig. 11) |
| | Maximum deflection of separation membrane element under load of 0.1 N | mm | | 1.9 | 1.1 | 1.1 | 1.0 | 0.9 |
| | Spacing between elements | mm | | 6 | 6 | 6 | 6 | 6 |
| | Proportion of (bubble diameter)/(spacing between adjacent membranes) >0.6 | % | | 54 | 56 | 56 | 55 | 55 |
| | Vibrational energy | mN/m | | 0.33 | 0.37 | 0.37 | 0.35 | 0.33 |
| | Rate of pressure-difference increase | Pa/d | | 50 | 44 | 43 | 48 | 50 |

Table 3

| | | | Example 11 | Example 12 | Example 13 | Example 14 | Example 15 |
|---|---|---|---|---|---|---|---|
| Resin parts | Form | - | stripes (Fig. 3) | stripes (Fig. 4) | stripes (Fig. 5) | stripes (Fig. 6) | dots (Fig. 1) |
| | Material | - | PP | PP | PP | PP | PP |
| | Bonding strength | N/m | 2500 | 2500 | 2500 | 2500 | 2500 |
| | Tensile modulus | MPa | 110 | 110 | 110 | 110 | 110 |
| | Major-axis length of channel material | mm | 65 | 20 | 65 | 65 | 4 |
| | Minor-axis length of channel material | mm | 4 | 4 | 4 | 4 | 4 |
| | Spacing of channel material (longer-side direction) | mm | 10 | 10 | 10 | 10 | 6 |
| | Spacing of channel material (shorter-side direction) | mm | 6 | 6 | 6 | 6 | 6 |
| | Projected area ratio of channel material | % | 35 | 27 | 35 | 35 | 13 |
| Element | Length(longer-side direction) | mm | 800 | 800 | 800 | 800 | 800 |
| | Length(shorter-side direction) | mm | 480 | 480 | 480 | 480 | 480 |
| | Bending modulus | MPa | 412 | 251 | 407 | 422 | 166 |
| | Maximum bending stress | MPa | 5.9 | 2.3 | 5.7 | 6.1 | 1.5 |
| | Areal proportion | % | 100 | 100 | 100 | 100 | 100 |
| | Ratio of pure-water permeation coefficient | - | 0.04 | 0.06 | 0.04 | 0.04 | 0.06 |
| Module | Method of fixing separation membrane elements | - | four-corner fixing (Fig. 11) | four-corner fixing (Fig. 11) | four-corner fixing (Fig. 11) | four-corner fixing (Fig. 11) | four-corner fixing (Fig. 11) |
| | Maximum deflection of separation membrane element under load of 0.1 N | mm | 1.3 | 2.5 | 1.3 | 1.3 | 2.1 |
| | Spacing between elements | mm | 6 | 6 | 6 | 6 | 6 |
| | Proportion of (bubble diameter)/(spacing between adjacent membranes)>0.6 | % | 54 | 52 | 55 | 55 | 51 |
| | Vibrational energy | mN/m | 0.41 | 0.31 | 0.39 | 0.43 | 0.29 |
| | Rate of pressure-difference increase | Pa/d | 34 | 54 | 41 | 31 | 51 |

Table 4

| | | | Example 16 | Example 17 | Example 18 | Example 19 | Example 20 |
|---|---|---|---|---|---|---|---|
| Resin parts | Form | - | dots (Fig. 1) | dots (Fig. 7) | stripes/ dots (Fig. 8) | stripes (Fig. 2) | stripes (Fig. 2) |
| | Material | - | PP | PP | PP | PP | PP |
| | Bonding strength | N/m | 2500 | 2500 | 2500 | 2500 | 2500 |
| | Tensile modulus | MPa | 110 | 110 | 110 | 110 | 110 |
| | Major-axis length of channel material | mm | 6 | 4 | 30/4 | 760 | 760 |
| | Minor-axis length of channel material | mm | 6 | 4 | 4/4 | 4 | 4 |
| | Spacing of channel material (longer-side direction) | mm | 4 | 6/16 | 0/6 | 0 | 0 |
| | Spacing of channel material (shorter-side direction) | m | 4 | 6/16 | 6/6 | 6 | 6 |
| | Projected area ratio of channel material | % | 27 | 4 | 4 | 40 | 40 |
| Element | Length(longer-side direction) | mm | 800 | 800 | 800 | 1200 | 600 |
| | Length(shorter-side direction) | mm | 480 | 480 | 480 | 720 | 360 |
| | Bending modulus | MPa | 221 | 202 | 267 | 598 | 598 |
| | Maximum bending stress | MPa | 1.6 | 1.4 | 1.4 | 8.4 | 8.4 |
| | Areal proportion | % | 100 | 10 | 10 | 100 | 100 |
| | Ratio of pure-water permeation coefficient | - | 0.05 | 0.05 | 0.05 | 0.02 | 0.10 |

(continued)

| | | | Example 16 | Example 17 | Example 18 | Example 19 | Example 20 |
|---|---|---|---|---|---|---|---|
| Module | Method of fixing separation membrane elements | - | four-corner fixing (Fig. 11) | four-corner fixing (Fig. 11) | four-corner fixing (Fig. 11) | four-corner fixing (Fig. 11) | four-corner fixing (Fig. 11) |
| | Maximum deflection of separation membrane element under load of 0.1 N | mm | 1.9 | 2.0 | 2.0 | 1.6 | 0.7 |
| | Spacing between elements | mm | 6 | 6 | 6 | 6 | 6 |
| | Proportion of (bubble diameter)/(spacing between adjacent membranes)>0.6 | % | 52 | 52 | 51 | 55 | 51 |
| | Vibrational energy | mN/m | 0.30 | 0.31 | 0.32 | 0.37 | 0.31 |
| | Rate of pressure-difference increase | Pa/d | 49 | 47 | 46 | 48 | 44 |

Table 5

| | | | | Example 21 | Example 22 | Example 23 | Example 24 | Example 25 | Example 26 |
|---|---|---|---|---|---|---|---|---|---|
| Resin parts | Form | | - | dots (Fig. 1) | stripes (Fig. 2) | dots (Fig. 1) | dots (Fig. 1) | stripes (Fig. 2) | nonwoven fabric /stripes |
| | Material | | - | PP | PP | PP | PP | PP | PET/PP |
| | Bonding strength | | N/m | 2500 | 2500 | 2500 | 2500 | 2500 | 2500 |
| | Tensile modulus | | MPa | 110 | 110 | 110 | 110 | 110 | 110 |
| | Major-axis length of channel material | | mm | 4 | 760 | 4 | 4 | 760 | 760 |
| | Minor-axis length of channel material | | mm | 4 | 4 | 4 | 4 | 4 | 4 |
| | Spacing of channel material (longer-side direction) | | mm | 6 | 0 | 6 | 6 | 0 | 0 |
| | Spacing of channel material (shorter-side direction) | | mm | 6 | 6 | 6 | 6 | 6 | 6 |
| | Projected area ratio of channel material | | % | 13 | 40 | 13 | 13 | 40 | 40 |
| Element | Length(longer-side direction) | | mm | 600 | 800 | 800 | 800 | 800 | 800 |
| | Length(shorter-side direction) | | mm | 360 | 480 | 480 | 480 | 480 | 480 |
| | Bending modulus | | MPa | 166 | 598 | 166 | 166 | 598 | 690 |
| | Maximum bending stress | | MPa | 1.5 | 8.4 | 1.5 | 1.5 | 8.4 | 10.1 |
| | Areal proportion | | % | 100 | 100 | 100 | 100 | 100 | 100 |
| | Ratio of pure-water permeation coefficient | | - | 0.12 | 0.06 | 0.06 | 0.06 | 0.04 | 0.04 |

(continued)

| Module | Method of fixing separation membrane elements | - | Example 21 | Example 22 | Example 23 | Example 24 | Example 25 | Example 26 |
|---|---|---|---|---|---|---|---|---|
| | | | four-corner fixing (Fig. 11) | four-corner fixing (Fig. 11) | six-portion fixing (Fig. 12) | eight-portion fixing (Fig. 13) | four-corner fixing (Fig. 11) | four-corner fixing (Fig. 11) |
| | Maximum deflection of separation membrane element under load of 0.1 N | mm | 2.0 | 0.9 | 1.2 | 0.6 | 0.9 | 1.4 |
| | Spacing between elements | mm | 6 | 6 | 6 | 6 | 4 | 6 |
| | Proportion of (bubble diameter)/ (spacing between adjacent membranes) >0.6 | % | 50 | 54 | 49 | 48 | 70 | 51 |
| | Vibrational energy | mN/m | 0.27 | 0.33 | 0.33 | 0.22 | 0.26 | 0.31 |
| | Rate of pressure-difference increase | Pa/d | 54 | 45 | 51 | 62 | 55 | 53 |

Table 6

| | | | Comparative Example 1 | Comparative Example 2 | Comparative Example 3 | Comparative Example 4 | Comparative Example 5 |
|---|---|---|---|---|---|---|---|
| Resin parts | Form | - | dots (Fig. 1) | net | tricot | film | supporting plate |
| | Material | - | EVA | PE | PET | PET | ABS |
| | Bonding strength | N/m | 900 | - | - | - | - |
| | Tensile modulus | MPa | 14 | - | - | - | - |
| | Major-axis length of channel material | mm | 4 | - | - | - | - |
| | Minor-axis length of channel material | mm | 4 | - | - | - | - |
| | Spacing of channel material (longer-side direction) | mm | 6 | - | - | - | - |
| | Spacing of channel material (shorter-side direction) | mm | 6 | - | - | - | - |
| | Projected area ratio of channel material | % | 13 | - | - | - | - |
| Element | Length(longer-side direction) | mm | 800 | 800 | 800 | 800 | 800 |
| | Length(shorter-side direction) | mm | 480 | 480 | 480 | 480 | 480 |
| | Bending modulus | MPa | 68 | 45 | 96 | 1200 | 2010 |
| | Maximum bending stress | MPa | 0.8 | 0.6 | 1.2 | 22 | 66 |
| | Areal proportion | % | 13 | 0 | 0 | 0 | 0 |
| | Ratio of pure-water permeation coefficient | - | 0.06 | 0.06 | 0.05 | 0.04 | 0.05 |

EP 3 424 587 A1

34

(continued)

| Module | | | Comparative Example 1 | Comparative Example 2 | Comparative Example 3 | Comparative Example 4 | Comparative Example 5 |
|---|---|---|---|---|---|---|---|
| | Method of fixing separation membrane elements | - | four-corner fixing (Fig. 11) | four-corner fixing (Fig. 11) | four-corner fixing (Fig. 11) | four-corner fixing (Fig. 11) | four-corner fixing (Fig. 11) |
| | Maximum deflection of separation membrane element under load of 0.1 N | mm | 6.1 | 9.2 | 4.3 | 8.9 | 0.0 |
| | Spacing between elements | mm | 6 | 6 | 6 | 6 | 6 |
| | Proportion of (bubble diameter)/(spacing between adjacent membranes)>0.6 | % | 48 | 47 | 48 | 45 | 42 |
| | Vibrational energy | mN/m | 0.13 | 0.14 | 0.15 | 0.12 | 0 |
| | Rate of pressure-difference increase | Pa/d | 69 | 71 | 77 | 71 | 93 |

In the tables, PP denotes polypropylene, EVA an ethylene/vinyl acetate copolymer, PET poly(ethylene terephthalate), and ABS an acrylonitrile/butadiene/styrene copolymer.

While the present invention has been described in detail and with reference to specific embodiments thereof, it will be apparent to one skilled in the art that various changes and modifications can be made therein without departing from the spirit and scope thereof. This application is based on a Japanese patent application filed on February 29, 2016 (Application No. 2016-036911) and a Japanese patent application filed on July 28, 2016 (Application No. 2016-148401), the contents thereof being incorporated herein by reference.

DESCRIPTION OF REFERENCE NUMERALS AND SIGNS

1: Flat-membrane type separation membrane element
2: Separation membrane
3: Separation functional layer
4: Substrate
5: Gap
6: Sealed part
7: Resin part
8: Permeate collection part
9: Water collection nozzle
10: Through hole
11: Water collection tube
12: Water collection pipe
13: Fixture
14: Housing frame
15: Flat-membrane type separation membrane module
16: Flat-membrane type separation membrane element
17: Separation membrane immersion type water tank
18: Air diffusion pipe
19: Blower
20: Suction pump
21: Inlet for water to be treated
22: Outlet for treated water
23: Permeate

**Claims**

1. A flat-membrane type separation membrane element comprising a separation membrane pair, wherein separation membranes are disposed so that permeate-side faces of the separation membranes face each other and a channel material is disposed inside between the separation membranes to form the separation membrane pair, and the separation membrane pair has a high-modulus region which satisfies, in at least one direction, a bending modulus of 100-1,000 MPa and a maximum bending stress of 1-15 MPa and an area of the high-modulus region accounts for 10% or more of an area of a filtration region of the separation membrane pair.

2. The flat-membrane type separation membrane element according to claim 1, wherein at least a part of the channel material is a plurality of resin parts, the resin parts having been fixed to both the permeate-side faces of the separation membrane pair.

3. The flat-membrane type separation membrane element according to claim 2, wherein the resin parts in the high-modulus region have a tensile modulus of 50-1,000 MPa.

4. The flat-membrane type separation membrane element according to claim 2 or 3, wherein the resin parts in the high-modulus region have been disposed at intervals.

5. The flat-membrane type separation membrane element according to any one of claims 2 to 4, wherein the resin parts have a major-axis length of 10 mm or larger.

**6.** The flat-membrane type separation membrane element according to any one of claims 2 to 5, wherein the resin parts have a minor-axis length of 1-20 mm.

**7.** The flat-membrane type separation membrane element according to any one of claims 2 to 6, wherein the resin parts in the high-modulus region have been disposed so that the resin parts extend continuously from one end to the other end of the high-modulus region in at least one direction.

**8.** The flat-membrane type separation membrane element according to any one of claims 2 to 7, which has a projected area ratio of the resin parts to the filtration region of the separation membrane pair of 15-80%.

**9.** The flat-membrane type separation membrane element according to any one of claims 2 to 8, wherein at least some of the resin parts lie on any straight lines passing through any point within the high-modulus region.

**10.** The flat-membrane type separation membrane element according to any one of claims 2 to 9, wherein the separation membranes have rectangular shape and the resin parts lie on at least a part of a straight line which passes through any point within the high-modulus region in a shorter-side direction of the separation membrane pair.

**11.** The flat-membrane type separation membrane element according to any one of claims 1 to 10, wherein each side of the separation membrane pair has a length of 300-2,000 mm.

**12.** The flat-membrane type separation membrane element according to any one of claims 1 to 11, wherein the separation membrane pair satisfies
$0.75 \times E1 \times L2/L1 \leq E2 \leq 1.25 \times E1 \times L2/L1$, where L1 is a longer-side-direction length and E1 is a bending modulus, of the separation membrane pair, and L2 is a shorter-side-direction length and E2 is a bending modulus of the separation membranes.

**13.** The flat-membrane type separation membrane element according to any one of claims 1 to 12, which has a pure-water permeation coefficient that is at least 0.02 times a pure-water permeation coefficient of the separation membranes.

**14.** An element unit comprising a housing frame and a plurality of flat-membrane type separation membrane elements, wherein
the plurality of flat-membrane type separation membrane elements are arranged in vertical direction in the housing frame in parallel with maintaining a gap in a horizontal direction,
the flat-membrane type separation membrane elements are fixed at any of peripheral edge parts,
the flat-membrane type separation membrane elements have a maximum deflection of 0.5-3.0 mm, when a load of 0.1 N is applied to a membrane surface most apart from the fixed parts of the flat-membrane type separation membrane elements.

**15.** An element unit comprising a housing frame and a plurality of the flat-membrane type separation membrane elements according to claims 1 to 13, wherein
the plurality of flat-membrane type separation membrane elements according to claims 1 to 13 are arranged in vertical direction in the housing frame in parallel with maintaining a gap in a horizontal direction,
the flat-membrane type separation membrane elements are fixed at any of peripheral edge parts,
the flat-membrane type separation membrane elements have a maximum deflection of 0.5-3.0 mm, when a load of 0.1 N is applied to a membrane surface most apart from the fixed parts of the flat-membrane type separation membrane elements.

**16.** The element unit according to claim 14 or 15, wherein any adjacent two of the flat-membrane type separation membrane elements are disposed with a spacing of 2-10 mm therebetween.

**17.** The element unit according to any one of claims 14 to 16, which satisfies that the maximum deflection which the flat-membrane type separation membrane elements have when a load of 0.1 N is applied to a membrane surface most apart from the fixed parts of the flat-membrane type separation membrane elements is smaller than the spacing between any adjacent two of the flat-membrane type separation membrane elements.

**18.** A flat-membrane type separation membrane module which comprises the element unit according to any one of claims 14 to 17 and an air-diffusing means disposed in a lower position than the element unit.

**19.** The flat-membrane type separation membrane module according to claim 18, wherein at least two portions of each of the flat-membrane type separation membrane elements have been fixed.

**20.** A method for operating a flat-membrane type separation membrane module, comprising operating the flat-membrane type separation membrane module according to claim 18 or 19 so that the flat-membrane type separation membrane elements vibrate at a vibrational energy of 0.2-0.5 mN/m.

**21.** The method for operating a flat-membrane type separation membrane module according to claim 20, wherein the air-diffusing means diffuses air bubbles, which ascend at an average speed of 0.5-6.0 m/min.

**22.** The method for operating a flat-membrane type separation membrane module according to claim 20 or 21, wherein 50-90% on average of diffused air bubbles which pass through the space between the adjacent flat-membrane type separation membrane elements satisfy B/C>0.6, where B (mm) is an equivalent spherical diameter of each of the diffused air bubbles which each have a volume of 0.5 mm$^3$ or larger and C (mm) is the spacing between the adjacent flat-membrane type separation membrane elements, when passing through the space between the adjacent flat-membrane type separation membrane elements during the operation.

Fig. 1

(a)

(b)

Fig. 2

Fig. 3

Fig. 4

Fig. 5

Fig. 6

Fig. 7

Fig. 8

Fig. 9

Fig. 10

Fig. 11

Fig. 12

Fig. 13

Fig. 14

## INTERNATIONAL SEARCH REPORT

| International application No. |
| --- |
| PCT/JP2017/007775 |

| A. CLASSIFICATION OF SUBJECT MATTER |
| --- |
| *B01D69/06*(2006.01)i, *B01D63/08*(2006.01)i, *B01D65/08*(2006.01)i, *B01D69/10* (2006.01)i, *C02F1/44*(2006.01)i |

According to International Patent Classification (IPC) or to both national classification and IPC

| B. FIELDS SEARCHED |
| --- |

Minimum documentation searched (classification system followed by classification symbols)
B01D61/00-71/82, B01D53/22, C02F1/44

Documentation searched other than minimum documentation to the extent that such documents are included in the fields searched

| Jitsuyo Shinan Koho | 1922–1996 | Jitsuyo Shinan Toroku Koho | 1996–2017 |
| Kokai Jitsuyo Shinan Koho | 1971–2017 | Toroku Jitsuyo Shinan Koho | 1994–2017 |

Electronic data base consulted during the international search (name of data base and, where practicable, search terms used)

| C. DOCUMENTS CONSIDERED TO BE RELEVANT |
| --- |

| Category* | Citation of document, with indication, where appropriate, of the relevant passages | Relevant to claim No. |
| --- | --- | --- |
| X<br>Y | WO 2011/004743 A1 (Sumitomo Electric Fine Polymer Inc.),<br>13 January 2011 (13.01.2011),<br>claims; paragraphs [0011], [0013]; fig. 1 to 7<br>& US 2012/0111784 A1<br>claims; paragraphs [0020] to [0021], [0024] to [0025]; fig. 1 to 7<br>& CA 2767567 A & CN 102470323 A<br>& EP 2455155 A1 & KR 10-2012-0057579 A<br>& SG 176834 A & TW 201105408 A | 1,11-22<br>2-13,15-22 |

☒ Further documents are listed in the continuation of Box C.  ☐ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>    07 April 2017 (07.04.17) | Date of mailing of the international search report<br>    18 April 2017 (18.04.17) |
| --- | --- |
| Name and mailing address of the ISA/<br>    Japan Patent Office<br>    3-4-3,Kasumigaseki,Chiyoda-ku,<br>    Tokyo 100-8915,Japan | Authorized officer<br><br>Telephone No. |

Form PCT/ISA/210 (second sheet) (January 2015)

**INTERNATIONAL SEARCH REPORT**

International application No.

PCT/JP2017/007775

C (Continuation).   DOCUMENTS CONSIDERED TO BE RELEVANT

| Category* | Citation of document, with indication, where appropriate, of the relevant passages | Relevant to claim No. |
|---|---|---|
| Y | WO 2013/125506 A1 (Toray Industries, Inc.), 29 August 2013 (29.08.2013), claims; tables 1 to 3; fig. 1 to 7 & US 2015/0021260 A1 claims; tables 1 to 3; fig. 1 to 7 & CN 104245101 A      & CN 105921025 A & EP 2818230 A1      & KR 10-2014-0130429 A | 2-13,15-22 |
| A | JP 2008-246371 A (Kubota Corp.), 16 October 2008 (16.10.2008), (Family: none) | 1-22 |
| A | JP 8-089768 A (Nitto Denko Corp.), 09 April 1996 (09.04.1996), (Family: none) | 1-22 |
| A | WO 2014/010554 A1 (Toray Industries, Inc.), 16 January 2014 (16.01.2014), & CN 104411643 A      & EP 2873650 A1 & KR 10-2015-0036221 A  & US 2015/0329381 A1 | 1-22 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2011004743 A
- JP 2008246371 A
- WO 2013125506 A
- JP 2016036911 A
- JP 2016148401 A